# EUROPEAN PATENT APPLICATION

(11) **EP 1 917 946 A2**
(43) Date of publication of application: **07.05.2008**
(21) Application number: 07020111.6
(22) Date of filing: 15.10.2007
(51) Int. Cl.: A61G 5/02, A61G 5/06, A61G 5/10

(54) **Personal mobility vehicle with two stage tilt ability and method for rearward tilting a seat**

(30) Priority: 06.11.2006 US 856950 P
(71) Applicant: Sunrise Medical GmbH & Co. KG, 69254 Malsch/Heidelberg (DE)
(72) Inventor: Knopf, Michael, 69234 Dielheim (DE)
(74) Representative: Weber-Bruls, Dorothée

(57) **Abstract**

The invention relates to a personal mobility vehicle having a two stage tilt ability comprising at least one base frame, at least one seat mounted with respect to the base frame for tilting rearward and a mounting mechanism for the seat configured to enable rearward tilting of the seat, wherein the mounting mechanism is adapted to rearward tilt the seat by a first pivoting of the seat through a first range of tilting, the first pivoting being about a first pivot point and a second pivoting of the seat through a second range of tilting, the second tilting being about a second pivot point; and a method for tilting a seat.

## Description

This invention relates to a personal mobility vehicle, especially a wheelchair, having a two stage tilt ability comprising at least one base frame, at least one seat mounted with respect to the base frame for tilting rearward and a mounting mechanism for the seat configured to enable rearward tilting of the seat; and to a method for rearward tilting a seat of a personal mobility vehicle, wherein the method comprises a first pivoting of the seat through a first range of tilting, the first pivoting being about a first pivot point.

Personal mobility vehicles, especially manual wheelchairs, advantageously have the capacity to tilt and recline to give relief for those sitting in the vehicle or wheelchair. That means that a rearward tilting of a seat is possible. Rearward tilting especially means that a seating area of a seat is pivoted so that with respect to a direction of seating of an occupant of the seat a rearward part of the seating area is lowered with respect to a forward part of the seating area.

For example EP 0 512 650 B1 discloses a generic personal mobility vehicle in form of a wheelchair allowing a rearward tilting of a seat. A seat frame is supported by a base frame wherein the seat frame and the base frame are connected via a front rod and a back rod. The front and back rod are pivotally connected to the seat frame and the base frame respectively. An adjusting means in form of a gas spring connected both to the base frame and the seat frame allows a pivoting of the back rod so that a reward part of the seat frame is lowered whereas a front part of the seat frame is hold in a mainly constant distance to the base frame. The disadvantage of the wheelchair shown in EP 0 512 650 B1 is that a range of tilting of the seat is limited. Personal mobility vehicles, especially wheelchairs and/or comfort chairs, are often used by older, severely handicapped people who are usually very passively sitting in their wheelchair. To reduce pressure scores on their skin, it is necessary to tilt their seat, they are sitting in to about 20°- 25°. The wheelchair of EP 0 512 650 B1 allows a tilting of approximately 30°. However studies showed that for an efficient reduction of pressure scores, a seat of a personal mobility vehicle, especially a modem comfort chair, should tilt to more than 30° and for best results down to 50°. In personal mobility vehicles shown in the state in the art, especially in conventional wheelchairs, when tilting to more than 30°, arm pads or a seat frame move downward to the rear wheels or a base frame and touch them, which limits the tilt range.

To move the wheels of the personal mobility vehicle to the side of the vehicle to avoid a contact of the seat with the wheel so as to extend a possible tilting range is also not an option as this would make the total width of the vehicle wider.

Another example of a tilt mechanism for a personal mobility vehicle is known from EP 1 506 760 A1 disclosing a constant centre of gravity lift and tilt mechanism for a wheelchair seat. A seat of a wheelchair is supported by a mechanism comprising a chair lifting mechanism and a tilting mechanism. The mechanism is connected via a support member and a rail member to a main frame of a wheelchair. Via a linear actuator a movement of a bearing connected to the rail member is generated to allow a lifting of the seat with respect to the main frame. Furthermore a seat member is rotatable connected to the mechanism and via a tilt actuator in form of a linear gas spring a tilt of the seat member with respect to the main frame can be altered. Also this tilt mechanism has the disadvantage that the tilt range is limited and does not allow a maximum relief of an occupant.

Furthermore it is common for wheelchairs to provide a drivable undercarriage for a wheelchair with an anti-tip wheel or rear caster wheel additionally to a main supporting wheel and front wheels. Such a rear caster wheel or anti-tip wheel is for example known from WO 00/12 040 A1 disclosing a personal mobility vehicle in form of a wheelchair provided with a jacking apparatus and an anti-tip device. A rear caster wheel is connected via a wheel support to an undercarriage frame. The wheel support is pivotable with respect to the undercarriage frame. A locking part allows a fixation of the support arm in respective idle positions, anti-tip positions and driving positions. The disadvantage of the wheelchair disclosed in WO 00/12 040 A1 is that a movement of the rear caster wheels is rather complicate as a person has to manually move the rear caster wheel into the wanted position after unlocking the locking mechanism. Especially a person has to bend down to move the rear caster or anti-tip wheel.

To reach a highest possible comfort for an occupant of a personal mobility vehicle, especially for a wheelchair, respective components of the personal mobility vehicle have to be adapted to the respective occupant. For example it is necessary that the geometric dimensions, like a width or a length, of a undercarriage frame of the personal mobility vehicle have to be adapted to the geometrical dimensions of a seat of the personal mobility vehicle giving the occupant the best possible comfort. Thus wheelchairs are often custom-made or tailor-made products leading to high production costs. A personal mobility vehicle is for example known from US 6,196,343 B1 disclosing a mid-wheel-drive-wheelchair.

Thus it is the object of the present invention to further develop the known personal mobility vehicle and the known method to overcome the disadvantages known in the state of the art, especially to provide a personal mobility vehicle and a method for tilting a seat of a personal mobility vehicle providing an increased tilting range.

The object with regard to the personal mobility vehicle is reached in that the mounting mechanism is adapted to rearward tilt the seat by a first pivoting of the seat through a first range of tilting, the first pivoting being about a first pivot point and a second pivoting of the seat through a second range of tilting, the second tilting being about a second pivot point.

It is especially preferred that the seat comprises at least one seat frame member and the mounting mechanism comprises at least one first actuation member to alter the tilt of the seat frame member with respect to the base frame, wherein especially the mounting mechanism further comprises at least one tilt frame with at least one tilt frame strut, the tilt frame strut is preferably at least indirectly connected to the base frame to be pivotable around at least one first pivot axis defining the second pivot point, wherein preferably the first pivot axis is fixed with respect to the base frame at least during a pivoting of the tilt frame strut with respect to the base frame, and/or the tilt frame strut is preferably at least indirectly connected to the seat frame member so that the seat frame member is pivotable around at least one second pivot axis with respect to the tilt frame strut, wherein especially the second pivot axis defines the first pivot point, and/or the mounting mechanism further comprises at least one second actuation member connected to the seat frame member and the tilt frame strut to pivot the seat frame member around the second pivot axis, wherein preferably the position of the second pivot axis with respect to the base frame is alterable by the first actuation member and the first actuation member is especially at least indirectly connected to the tilt frame strut and at least indirectly connected to the base frame.

A further advantageous embodiment of the invention is characterised in that the first pivot point is positioned forward of the second pivot point, especially with respect to a direction of seating of an occupant of the personal mobility vehicle.

Furthermore it is proposed with the invention that the position of the second pivot axis with respect to the base frame is alterable by pivoting the tilt frame strut about the first pivot axis by the first actuation member.

It is especially preferred that the base frame is functionally connected to, especially supported by, at least one drive device, especially in form of at least one wheel, at least on caster, at least one chain drive and/or at least one crawler drive, wherein the drive device is preferably realized by a pair of opposed primary support wheels positioned approximately at the center of the personal mobility vehicle.

Also it is preferred that the tilt frame comprises at least one tilt frame plate, wherein the tilt frame plate is at least partly comprised by the base frame or the tilt frame plate is detachable attached to the base frame, especially to alter a position, like a horizontal position, a vertical position or an angle, of the tilt frame with respect to the base frame.

In the before described embodiments of the invention it is especially preferred that the first actuation member is, preferably detachable, connected at least indirectly to the base frame or the tilt frame plate at at least one first connection point and/or is, preferably detachable, connected at least indirectly to the tilt frame strut at at least one second connection point, wherein especially a distance between the first pivot axis on the one hand and the first connection point and/or the second connection point on the other hand is alterable.

For this embodiment of the invention it is proposed that the second connection point is located in the area of the second pivot axis.

Furthermore embodiments of the invention can be characterized in that the tilt frame further comprises at least one first tilt frame rod defining the first pivot axis, wherein preferably the first tilt frame rod is formed as an axle and/or the tilt frame strut is pivotable about the first tilt frame rod.

Further advantageous embodiments of the invention comprise the features that the tilt frame comprises at least two tilt frame plates, wherein the tilt frame plates are preferably connected to each other via the first tilt frame rod, wherein especially the tilt frame comprises at least one second tilt frame rod, preferably a plurality of second tilt frame rods, connecting the two tilt frame plates to each other.

Furthermore it is proposed that the first pivot axis is, at least temporarily, located in a rearward half of the seat frame member, especially located behind the seat frame member, with respect to a direction of seating of the seat and/or the second pivot axis is, at least temporarily, located in a forward half of the seat frame member, especially located in front of the seat frame member, with respect to a direction of seating of the seat.

Also a personal mobility vehicle can be characterized in that the second actuation member is connected to the tilt frame strut via at least one extension, wherein the extension extends preferably mainly perpendicular to the tilt frame strut and/or the extension is connected to the tilt frame strut in the area of the first pivot axis.

In this embodiment it is preferred that the tilt frame strut comprises at least one enforcement sheet, preferably attached to the extension and/or in that the tilt frame strut is tubular.

Further advantageous embodiments of the invention can show that the second actuation member is, preferably detachable, connected at least indirectly to the seat frame member at at least one third connection point and/or is, preferably detachable, connected at least indirectly to the tilt frame strut at at least one fourth connection point, wherein especially at least one distance between the second pivot axis and the third connection point and/or at least one distance between the first pivot axis and the fourth connection point is alterable.

Furthermore it is preferred that the seat comprises at least one backrest pivotable about at least one third pivot axis and connected at least indirectly to the seat frame member, wherein preferably at least one tilt of the backrest with respect to the seat frame member is alterable by at least one third actuation member to pivot the backrest about the third pivot axis.

A personal mobility vehicle according to the invention can be characterized in that the third actuation member is, preferably detachable, at least indirectly connected to the seat frame member at at least one fifth connection point and/or the third actuation member is, preferably detachable, at least indirectly connected to the backrest at at least one sixth connection point, wherein preferably at least one distance between the third pivot axis on the one hand and the fifth connection point and/or the sixth connection point on the other hand is alterable and/or a connection of the third actuation member to the seat frame member and/or to the backrest is automatically detachable when the backrest is pivoted manually.

Furthermore it is proposed that the first connection point, the second connection point, the third connection point, the fourth connection point, the fifth connection point, the sixth connection point and/or at least one connection point between at least one tilt frame plate and the base frame comprises at least one bolted connection, at least one screw coupling, at least one plug connection, at least one snap-on connection, at least one form-fit connection and/or at least one force-fit connection.

The invention can be characterized in that at least one height of the seat with respect to a support surface is adjustable, especially a height of the seat frame and/or the tilt frame with respect to a support surface and/or the base frame is adjustable, preferably by altering at least one mount position of the tilt frame, especially of the tilt frame plate, with respect to the base frame.

Further advantageous embodiments of the invention can offer the feature that the first actuation member, the second actuation member and/or the third actuation member comprise(s) at least one spring element, preferably comprising at least one gas spring, at least one motor drive at least one locking device, at least one latching device and/or at least one worm gear drive and/or a first, rear gas spring is mounted to control the first pivoting and a second, forward gas spring is mounted to control the second pivoting.

It is furthermore preferred that the first actuation member is only operable when the second actuation member is in at least one predetermined first operating condition, especially in at least one first operating position, and/or the second actuation member is only operable when the first actuation member is in at least one predetermined second operating condition, especially in at least one second operating position and/or the first actuation member and the second actuation member are not operable simultaneously.

For this embodiment it is proposed with the invention that the first operating condition is defined by at least one tilt angle of the seat frame member with respect to at least one normal position, especially the first operating condition is fulfilled when the tilt angle and/or the modulus of the tilt angle of the seat frame member is equal to or larger than a first tilt angle value and/or the second operating condition is fulfilled when the tilt angle and/or the modulus of the tilt angle of the seat frame member is equal to or less than a second tilt angle value, wherein preferably the first tilt angle value is equal to the second tilt angle value.

A personal mobility vehicle according to invention can be characterized in that the first range of motion is from about 0 to about 30 degrees, and the second range of motion is from about 30 degrees to about 50 degrees and/or the normal position of the seat frame member corresponds to an tilt angle of 0° and/or the first tilt angle value and/or the second tilt angle value is/are in an interval of 10° to 50°, preferably 20° to 40°, more preferably 25° to 35° and most preferably in the interval of 29° to 31°.

It is furthermore preferred that the first actuation member is operable via at least one first operation device and the second actuation member is operable via at least one second operation device, wherein preferably the first operating device is not actuatable by an operator, especially by exerting a pre-load to the first operating device, as long as the second actuation member is not in the first operating condition and/or the second operating device is not actuatable by an operator, especially by exerting a pre-load to the second operating device, as long as the first actuation member is not in the second operating condition.

With the invention it is proposed that the first operating device and the second operating device are at least partly identical, preferably the first operating device and the second operating device are formed by a handle, wherein especially the handle acts in a first actuation interval as the second operating device and the handle acts in a second actuation interval as the first operating device.

An inventive personal mobility vehicle can be characterized in that the first operating device comprises at least one first rotating grip and/or the second operating device comprises at least one second rotating grip.

Further advantageous embodiments of the invention are characterised in that the first operating device and/or the second operating device are provided next to at least one handle of the personal mobility vehicle, especially such that the first operating device is operable by a first hand of an operator, whereas the second operating device is operable by the other hand of the operator.

The invention proposes for the personal mobility vehicle furthermore one or more front caster wheels and/or one or more rear caster wheels.

Finally the invention proposes that the vehicle is realized in form of a wheelchair.

The object with regard to the method is reached in that the method comprises a second pivoting of the seat through a second range of tilting, the second tilting being about a second pivot point.

A preferred embodiment of the inventive method is characterized in that the method further comprises pivoting a seat frame member of the seat about a second pivot axis defining the first pivot point with respect to at least one tilt frame strut at least indirectly connecting the seat frame member to a base frame of the personal mobility vehicle and pivoting the tilt frame strut with respect to the base frame about a first pivot axis defining the second pivot point.

The two above mentioned methods can be characterized in that the pivoting of the tilt frame strut about the first pivot axis and/or the seat about the second pivot point is controlled by at least one first actuation member and/or the pivoting of seat frame member around the second pivot axis and/or the seat about the first pivot point is controlled by at least one second actuation member.

With the invention it is furthermore proposed that for increasing the tilt of the seat firstly the seat frame member is pivoted about the second pivot axis, especially by operating the second actuation member, and secondly the tilt frame strut is pivoted about the first pivot axis, especially by operating the first actuation member, when a tilt angle and/or a modulus of a tilt angle of the seat frame member is equal or greater than a first tilt angle value, and/or that for decreasing the tilt of the seat firstly the tilt frame strut is pivoted about the first pivot axis, especially by operating the first actuation member, and secondly the seat frame member is pivoted about the second pivot axis, especially by operating the second actuation member, when a tilt angle and/or a modulus of a tilt angle of the seat frame member is equal or less than a second tilt angle value.

Furthermore the invention proposes that the first tilt angle value is equal to the second tilt angle value.

Finally the inventive method can be characterized in that the method further comprises altering the tilt of at least one backrest of the seat with respect to the seat frame member, especially by operating at least one third actuation member.

For the personal mobility vehicle it is furthermore proposed that the vehicle has a base frame and one or more rear caster wheels, wherein the rear caster wheel is supported by at least one caster arm that is movable mounted with respect to the base frame and a locking mechanism secures the caster arm in any one of several positions, with each position maintaining the rear caster wheel at a specified distance from a supporting surface of the personal mobility vehicle and the locking mechanism comprises at least one first biasing device forcing the caster arm into at least one first position.

With the invention is furthermore proposed that the rear caster wheel is forced away from the supporting surface of the personal mobility vehicle by the first biasing device.

In the two above describe embodiments it is preferred that the supporting surface of the personal mobility vehicle is the ground.

Furthermore a personal mobility vehicle according to the invention can be characterized in that the locking mechanism comprises at least one actuation device, preferably operatable by the foot of a user of the personal mobility vehicle, to release the caster arm from at least one second position, especially to move the caster arm, preferably driven by the first biasing device, into the direction of the first position.

Further advantageous embodiments of the invention show the features that the caster arm is securable by the locking mechanism in at least one third position located between the first and the second position, wherein preferably the caster arm can be released from the third position by actuating the actuation device, especially to move the caster arm, preferably driven by the first biasing device, into the direction of the first position.

In this embodiment it is preferred that the personal mobility vehicle is characterized by a plurality of third positions.

Furthermore it is preferred that the caster arm can be transferred from the first into the third position and/or the second position and/or from one of the third positions into one of the other third positions and/or the second position by forcing, preferably pressing and/or pushing, the caster arm into the direction of the second position, especially by the foot of a user.

Also it is proposed that the rear caster wheel is closer to the supporting surface, especially the ground, in the second position of the caster arm in comparison to the third position of the caster arm and/or the rear caster wheel is closer to the supporting surface, especially the ground, in the third position of the caster arm in comparison to the first position of the caster arm.

Furthermore a personal mobility vehicle according to the invention can be characterized in that the caster arm is securable by the locking mechanism in at least one fourth position, preferably in a plurality of fourth positions, wherein the rear caster wheel is more remote from the supporting surface, especially the ground, in the fourth position of the caster arm in comparison to the first position of the caster arm.

In this embodiment it is preferred that the caster arm is moved manually, especially by manually lifting the caster arm by a user of the personal mobility vehicle, from the first position into the fourth position.

In the two above mentioned embodiments it is preferred that the caster arm can be transferred from the fourth position into the first position by actuating the actuation device and/or by exerting a force onto the caster arm, especially by the foot of a user of the personal mobility vehicle.

Preferred embodiments of the inventions are characterized in that the locking mechanism comprises at least one pin, especially in functional relationship with the caster arm, preferably connected to the caster arm, that is movable within a slot, wherein especially the slot is realised in form of at least one slotted link.

In this embodiment it is preferred that the slot includes several, especially at least two, notches to seat the pin in a specific position, wherein preferably the position of at least one notch corresponds to the first position, the second position, the third position and/or the fourth position of the caster arm and/or at least one notch determines the distance of the rear caster wheel off the supporting surface, especially the ground.

With the invention furthermore a personal mobility vehicle with at least one second biasing device, preferably in form of a spring, that forces and/or maintains the pin in at least one notch, is proposed.

Further embodiments of the invention may have the features that the slot comprises at least one inclination to guide and/or force the pin into at least one notch.

Further advantageous embodiments of the personal mobility vehicle are characterized in that the actuation device comprises at least one lever, wherein by actuating the lever the pin is released from at least one notch and/or guided into at least one notch.

Furthermore is preferred that the actuation device, especially the lever, comprises the slot.

The invention further proposes that the caster arm is pivotally mounted with respect to the base frame, wherein the caster arm is pivotally about a first rotating axis and/or the lever is pivotally mounted with respect to the base frame, wherein the lever is pivotally about a second rotating axis.

Also it is proposed that the lever is forced by the second biasing device into at least one engaging position in which the pin seats in at least one notch.

With the invention it is preferred that the base frame is functionally connected to, especially supported by, at least one drive device, especially in form of at least one wheel, at least on caster, at least one chain drive and/or at least one crawler drive, wherein the drive device preferably is formed by a pair of opposed primary support wheels, especially positioned approximately at the center of the personal mobility vehicle.

A further embodiment of the inventive personal mobility vehicle can be characterized in that the personal mobility vehicle further comprises one or more front caster wheels and/or a seat mounted with respect to the base frame.

In this embodiment it is proposed that the front caster wheel is connected to the base frame via at least one suspension system, wherein the suspension system allows a movement of the front caster wheel with respect to the base frame, especially when the personal mobility vehicle touches and/or overrides an obstacle.

For the last mentioned alternative it is preferred that the suspension system comprises at least one third biasing device forcing the front caster wheel in a direction to contact the supporting surface, especially the ground.

In the two before mentioned alternatives a personal mobility vehicle can be characterized in that the suspension system comprises at least one housing that is at least indirectly connected to the base frame by at least one upper link and at least one lower link, especially with the caster housing, the upper and lower links, and the base frame forming a 4-bar link.

In the last mentioned embodiment the personal mobility vehicle can be furthermore characterized in that the third biasing device controls the movement of the 4-bar link, wherein preferably the third biasing device comprises at least one first biasing member connected to the upper link and/or at least one second biasing member connected to the lower link.

Furthermore it is preferred that the upper link and/or the lower link is/are connected to the base frame.

For further advantageous embodiment of the invention it is proposed that the base frame has at least one slot and the upper link is connected to the base frame in the slot so that the pivot point of the upper link with respect to the base frame can move as the upper link pivots with respect to the base frame.

With the invention it is furthermore proposed that the first biasing device, the second biasing device and/or the third biasing device, especially the first biasing member and/or the second biasing member, comprise(s) at least one spring element and/or at least one bent wire.

Also an inventive personal mobility vehicle can be characterized in that the personal mobility vehicle is realized in form of a wheelchair, wherein preferably the base frame is realized in form of a wheelchair frame.

Also a method for moving a rear caster wheel of a personal mobility vehicle, especially a vehicle according to the invention, into a first position is proposed, wherein the method comprises locking a caster arm that connects the rear caster wheel to a base frame in a second position using a locking mechanism and releasing the locking by an actuating device, wherein the caster arm is moved into the first position forced by at least one first biasing device.

This method can be characterized in that the caster arm is forced by the first biasing device into a direction to increase a distance between a supporting surface of the personal mobility vehicle and the rear caster wheel.

It is furthermore proposed that the caster arm is locked by the locking mechanism in at least one third position located between the second and the first position.

In the last mentioned alternative of the method is preferred that the locking of the caster arm in the third position is released by actuating the actuation device, wherein the caster arm is preferably forced into the direction of the first position by the first biasing device when the locking in the third position is released.

Furthermore it is proposed that the caster arm is manually moved from the first to at least one fourth position, wherein preferably the caster arm is locked by the locking mechanism in the fourth position and/or the distance of the rear caster wheel to the supporting surface is increased by moving the caster arm from the first position into the direction of the fourth position.

In the last mentioned embodiment of the method it is advantageous that the locking of the caster arm in the fourth position is released by actuating the actuation device, wherein preferably the caster arm is moved automatically, especially due a gravitational force, into the direction of the first position.

Furthermore the method can be characterized in that the locking of the caster arm in the first position or in the fourth position is released by manually moving the caster arm into the direction of the third position and/or the second position and/or the locking of the caster arm in the third position is released by manually moving the caster arm into the direction of the second position, wherein, especially the manually moving comprises exerting a force onto the caster arm, especially pushing the caster arm with a foot by an operator of the personal mobility vehicle.

Also the method can be characterized in that the actuating of the actuation device comprises the pushing and/or pulling of at least one lever of the actuation device, especially by a foot of an operator of the personal mobility vehicle.

Furthermore a personal mobility vehicle is proposed that has a base frame comprising at least one drive device and at least one seat carrying frame, wherein the base frame comprises at least one pair of separate base frame members mounted at opposite sides to the seat carrying frame, wherein each of the base frame members is detachable mounted via at least one interchangeable spacer to the seat carrying frame.

It is furthermore proposed that the base frame members are connected to each other exclusively via the seat carrying frame.

In the above two mentioned embodiments it is preferred that the seat carrying frame comprises at least one seat, at least one seat frame member, at least one backrest, at least one arm rest, at least one tilt frame, especially allowing an adjustment of the seat and/or the seat frame member at different tilt angles, at least one handle device, especially for pulling and/or pushing the personal mobility vehicle and/or at least one foot rest.

Furthermore there is provided a personal mobility vehicle characterized in that the base frame comprises at least one first pair of base frame members comprising a first base frame member and a second base frame member and/or the base frame comprises at least one second pair of base frame members comprising a third base frame member and a fourth base frame member, wherein preferably with respect to a driving direction of the personal mobility vehicle the first base frame member is located at a right side of the personal mobility vehicle and the second base frame member is located at a left side of the personal mobility vehicle and/or with respect to a driving direction of the personal mobility vehicle the third base frame member is located at a front side of the personal mobility vehicle and the fourth base frame member is located at a rear side of the personal mobility vehicle.

It is especially preferred that the drive device of each base frame member, especially the first and the second base frame member, of a pair of base frame members, especially of the first pair of base frame members, comprise at least one primary support wheel, preferably further at least one rear caster and/or anti-tip wheel and/or at least one front caster wheel.

Advantageous embodiments of a personal mobility vehicle have the features that the drive device of one base frame member, especially the third base frame member or the fourth base frame member, of a pair of base frame members, especially of the second pair of base frame members, comprise at least one pair of primary support wheels, wherein preferably the base frame member further comprise at least one rear caster and/or anti-tip wheel, especially a pair of rear caster and/or anti-tip wheels, or at least one front caster wheel, especially a pair of front caster wheels.

Furthermore it is proposed that at least one length and/or at least one width of the base frame members and/or at least one geometrical dimension of at least one spacer is adjustable.

It is also preferred that at least one base frame member is connected to the seat carrying frame by at least one bolted connection, at least one screw coupling, at least one plug connection, at least one snap-on connection, at least one form-fit connection and/or at least one force-fit connection with the invention.

It is proposed that the base frame members are mountable to the seat carrying frame in at least two different vertical positions with respect to a supporting surface of the personal mobility vehicle and/or the base frame members are mountable to the seat carrying frame in at least two different horizontal positions with respect to a supporting surface of the personal mobility vehicle.

Finally a personal mobility vehicle can be characterized in that at least one dimension of the spacer and/or at least one horizontal position of the base frame member is adapted to position a centre of gravity of an occupant of the personal mobility vehicle to be mainly coincident with the position of at least one drive device, especially at least one primary support wheel.

Thus the invention is based on the astonishing perception that a tilting range of a seat of a personal mobility vehicle can be increased by a rearward tilting of the seat in two steps wherein in a first pivoting the seat is tilted through a first tilting range whereas the seat is tilted through a second tilting range after a predetermined tilting of the seat has been reached by the first pivoting. Hereby it is important to notice that the tilting of the seat is reached by pivoting about two different pivot points.

When tilting the wheelchair through the first range of tilting to a predetermined fist tilt angle, for example to 30°, the pivot point or pivot axis for that tilt is preferably close to the front of the seat, at least located in the front half of the seat, so that the knees of the person sitting in the seat/chair do not lift up. Therefore, it is still possible to move under a table. When tilting the seat from the first tilt angle, for example 30°, to a maximum tilt angle, for example 50°, the pivot point or pivot axis of the seat is preferably now in the rear of the chair or seat. In this way it is still possible to avoid interference of the seat with the rear wheels or a support frame.

Preferably two tilt mechanisms that are in functional relationship are provided by a mounting mechanism, especially a tilting frame. The first mechanism enables a tilt from the normal position to the first tilt angle of a seat frame member or seat plate whereas the second tilt mechanism enables a tilting of the seat frame member from the first tilt angle to the maximum tilt angle. It is desirable that both tilting mechanisms are not operatable simultaneously. Rather for the first tilt range only the first tilting mechanism and for the second tilting range only the second tilting mechanism have to be operated. Each tilting mechanism may comprise an actuation element, for example a gas spring, allowing an automatic movement of the mechanism and/or may comprise an actuating element in form of a locking mechanism only prohibiting a manually movement of the mechanism, whereby the movement of the seat is achieved manually.

Although not necessary the personal mobility vehicle according to the invention may have the (conventional) main supporting wheels forward (mid wheel concept), in contrast to wheelchairs where the main supporting wheel is in the rear of the chair, to prevent the possibility that arm pads of the seat or other elements of the seat, for example the seat frame member, can contact a main supporting or rear wheel.

To either avoid a contact of knees of a person sitting in the seat with an obstacle like a table, and to avoid a contact of an element of the seat with a base frame or a drive device like a wheel, the first tilting mechanism is arranged backwards of the second tilting mechanism with respect to a drive direction or seating direction. This ensures that the knees of the person sitting in the seat will not exceed a certain level. When realizing a mid wheel concept thus the first actuation element or gas spring can be arranged in front of an axle of a main supporting wheel whereas the second actuation element or gas spring can be arranged between an axle of a main supporting wheel and a backrest with respect to a driving direction of the personal mobility vehicle.

The actuation members of the mounting mechanism are preferably actuable by respective first and second operating devices. The operating devices can be separate devices or can be realized by one operating device having two operating ranges corresponding to the first and second tilt ranges. For example the operating device can be realized in form of a rotating grip provided next to a handle of the personal mobility vehicle. Both actuation members are connected to respective parts of the operating device such that a second actuation member can be actuated by manipulating the operating device within a first range and the first actuation member is actuated when the operating device is manipulated within a second operating range. Alternatively it is possible that a first actuation member is connected to a first part of a operating device that can be for example manipulated by a right hand of an operator of the personal mobility vehicle whereas the second actuation member can be actuated by a second part of the operating device, for example by the left hand of an operator of the personal mobility vehicle. In order to avoid a simultaneous actuation of the actuation members care is taken that the first actuation member is sufficiently biased only in the region of a tilt of the normal position to the first predetermined tilt angle whereas the second actuation member is sufficiently biased only in a region of a tilt from the first predetermined tilt angle to a maximum tilt angle.

In a preferred embodiment of the invention the seat furthermore comprises a backrest that can be additionally tilted with respect to a seat frame member of the seat. This tilting is preferably controllable by a third actuation member. By tilting the backrest with respect to a seating surface a further tilting of a person sitting in the personal mobility vehicle is possible, especially to reach a further relief of a person.

To provide a personal mobility vehicle and a method for manipulating a rear caster wheel which allows a comfortable moving of a rear caster wheel by an operator of the personal mobility vehicle in a preferred embodiment of the invention the finding is used that by providing a first biasing device forcing a caster arm into a first position, whereby a rear caster wheel or anti-tip wheel that is carried by the caster arm is lifted off a supporting surface of the personal mobility vehicle, a comfortable manipulation of the position of the rear caster wheel or anti-tip wheel is possible.

Each step in the use of the wheelchair has to be possible in the easiest matter. As conventional rear caster wheels or anti-tip wheels, that may be fixed with respect to a base frame, prevent easy operation of the wheelchair when moving, especially going down a curb, the ability of the personal mobility vehicle according to the invention to allow a comfortable manipulation of a position of a rear caster wheel or anti-tip wheel ease the operation of the whole personal mobility vehicle. According to the invention, it is possible to swing the rear anti-tip wheel upward in a user-friendly way. The rear or anti-tip wheel can be especially a caster wheel or an idler wheel.

Similar to conventional anti-tipping wheels the rear caster wheels according to this embodiment may be typically mounted at 0 cm to 2 cm above a supporting surface, like a ground or a floor, when the personal mobility vehicle is operated on a flat surface and 30 - 40 cm behind the center of the rear drive wheel to prevent a tipping backward when in use. Similar to conventional personal mobility vehicles, especially wheelchairs, in case the rear caster wheels are not in use, it is possible to swing them upward or forward. It is not necessary to remove the rear caster wheels completely as known in the state of the art, what is rather complicated, but an operator of the personal mobility vehicle can easily manipulate the position of the rear caster wheel during the use of the personal mobility vehicle. The rear caster wheel is mounted by a locking mechanism to a base frame of the personal mobility vehicle. When being used as an anti-tip wheel on a flat supporting surface the rear caster wheel is locked in a second position against the force of the first basing device. In the second position of the caster arm the rear caster wheel is preferably in contact with a supporting surface or at a ground level.

The locking mechanism preferably comprises at least one actuation device allowing an unlocking of the caster arm. Preferably this actuation device maybe operated by a foot of an operator of the personal mobility vehicle so that it is not necessary that the operator bends down to release the rear caster wheel from this second position. The locking mechanism may comprise a lever lock and/or a clamp to cooperate with one of two pins. As soon as the lever lock or on actuation device of the locking mechanism of the rear caster wheel is actuated, for example by a foot kick, the locking mechanism will release the caster arm so that the rear caster wheel will move upwards into the direction of the first position due to the force of the first biasing device. Preferably the caster arm is than secured by the locking mechanism in the first position, especially in that the clamp engages a first pin, wherein the first position is chosen for example so that a rear caster wheel is in a position of 5 cm above ground level.

Thus for example by stepping on a lever look the anti-tip or rear caster wheel will be unlocked and swing upward with the help of a spring. Preferably a special slot inside the lever look will keep it in the lower and in the upward position.

It is furthermore possible that the caster arm and thus the rear caster wheel maybe secured in at least one third position between the second and first position. From this intermediate position the rear caster wheel may be again released by operating the actuation device to move the caster arm and thus the rear caster wheel into the direction of the first position. The first position of the rear caster wheel especially allows to maneuver the personal mobility vehicle onto a curb.

From this first position the rear caster wheel can be brought back into the second position in which the rear caster wheel is especially in contact with a supporting surface when being on a flat surface, by applying a force onto the caster arm or the rear caster wheel to move the caster arm against the force of the first biasing device into the direction of the second position. This force can be applied for example by a foot of a user. In this way the rear caster wheel is lowered until the caster arm is again locked in the second position by the locking mechanism. Thus for example stepping on the anti-tip or rear caster wheel will automatically release it and move it downward where it will be locked again.

Furthermore it is possible to move the caster arm and thus the rear caster wheel from the first position into at least one fourth position, wherein the rear caster wheel is more remote from the ground or supporting surface when in the first position. For example the rear caster wheel can be 12 cm above the supporting surface in the fourth position. This position for example allows to maneuver the personal mobility vehicle onto stairs. To move the caster arm into this fourth position preferably an operator of the personal mobility vehicle actuates the actuation device to release the caster arm from the locking mechanism. Subsequently the caster arm may be moved upwards manually, for example by a foot of an operator of the personal mobility vehicle, until the caster arm is secured by the locking mechanism in the fourth position for example in that the clamp engages a second pin. In an alternative embodiment this upward movement of the caster arm to the fourth position may also be supported or caused by a biasing device, especially the first biasing device.

To release the rear caster wheel from this fourth position preferably a user of the personal mobility vehicle operates the actuation device to allow a movement of the rear caster wheel from the fourth position into the first position by a gravitational force. In the first position the rear caster wheel is again secured by the locking mechanism and may be brought into the second position again by a force onto the caster arm, especially generated by a foot of the user. Thus the relative position of the rear caster wheel to a supporting surface can be adjusted simply by lifting or lowering the foot of a person pushing the wheelchair to operate the actuation device or to lift and/or lower the rear caster wheel.

Although having a rear caster wheel as described above, a wheelchair with centrally arranged drive wheels might lead to difficulties when moving a wheelchair up a ramp. In such a situation it could be the case that the locked rear caster wheels and front wheels are set on ground level, but not the driving wheels such that the wheelchair can slip to either side. Therefore, the front wheels may be additionally provided with a mechanism to lift the same up a predefined distance, for example around 5 cm, such that the drive wheels are lowered relative to the front wheels in order to get in contact with the ground level. For this purpose the front wheels may be provided with a special suspension system.

In a further advantageous embodiment of the invention a personal mobility vehicle that can easily be adapted to the needs of an occupant of the personal mobility vehicle and enhances the overall flexibility is provided. In this embodiment the cognition is used that by designing a personal mobility vehicle, especially in form of a wheelchair, comprising a base frame, that is not self supporting as being realised by two separate base frame members, and a seat carrying frame in such a way that the base frame members are detachable mounted via interchangeable spacers to the seat carrying frame the overall flexibility of the personal mobility vehicle can be increased as the personal mobility vehicle is realised in form of a modular system. In this way a personal mobility vehicle, especially in form of a wheelchair, may comprise a driving frame and a seat frame with the driving frame comprising two side frame structures. For example each of the side frame structures or base frame members may have a drive wheel, front wheel and/or rear caster wheels. The seat frame comprises the remaining parts of the personal mobility vehicle, for example a seat plate, handle and a, tilting frame. A connection of the drive frame to the seat frame can be for example reached by a screw connection. In this way it is possible to adapt the personal mobility vehicle to the needs of a respective user without the necessity to make any constructional changes to the modular elements of the personal mobility vehicle. For example the base frame or driving frame may be adapted to a respective seat width by arranging between the base frame elements or side frame structures and the seat frame spacers wherein the width of the spacers is selectable to adjust for example the distance between main support wheels comprised by the side frame structures to a width of a seat used in the personal mobility vehicle.

To further increase the convenience when operating the personal mobility vehicle according to the invention it is proposed to have primary support or drive wheels centrally arranged. That is, the drive wheels are arranged beneath a center of a seat plate such that the weight of a occupant is acting on the axle of the drive wheels. This reduces the forces necessary to manoeuvre the wheelchair, facilitates a tilting thereof, facilitates a manual usage not only due to the reduced forces necessary but also to the enhanced accessibility of gripping rings of the drive wheels. It also has to be noted that wheelchairs with centrally arranged drive wheels substantially do not put a weight on front wheels and only a small weight on rear wheels, the rear wheels becoming steering wheels which have to have contact with the ground.

Further features and advantages of the invention will become evident from the following description, in which preferred embodiments of the invention in form of wheelchairs are explained by way of examples with reference to schematic drawings in which:
Figure 1 is a front elevation view onto a wheelchair according to a first embodiment of the invention;
Figure 2 is a side elevation view onto the wheelchair of figure 1;
Figure 3 is a front view onto the wheelchair of figure 1;
Figure 4 is a side view onto a base frame member of the wheelchair of figure 1;
Figure 5a is a schematic side view of a wheelchair according a second embodiment of the invention having a seat in an upright tilt position;
Figure 5b is a schematic view of the mounting mechanism of the wheelchair shown in figure 5a;
Figure 6a is a schematic side view of the wheelchair of figure 5a in a first tilt position;
Figure 6b is a side view of the mounting mechanism of figure 5b in the first tilt position;
Figure 7a is a schematic side view of the wheelchair of figure 5a in a second tilt position;
Figure 7b is a side view of the mounting mechanism of figure 5b in the second tilt position;
Figure 8 is a schematic view of a operating device for actuating the mounting mechanism of the figures 5b, 6b and 7b;
Figure 9a is a perspective view onto a wheelchair according to a third embodiment of the invention wherein a mounting mechanism is in an upright position;
Figure 9b is a schematic view of the mounting mechanism of the wheelchair of figure 9a;
Figure 10a is a side view of the wheelchair of figure 9a in a first tilt position;
Figure 10b is a schematic view of the mounting mechanism of figure 9b in the first tilt position;
Figure 11 a is a side view of the wheelchair of figure 9a in a second tilt position;
Figure 11b is a schematic view of the mounting mechanism of figure 9b in the second tilt position;
Figure 12a is a schematic elevation view of a rear caster wheel of a wheelchair according to the invention;
Figure 12b is a schematic side view of the rear caster wheel of figure 12a;
Figure 13a is a schematic elevation view of the rear caster wheel of figure 12a in a first raised position;
Figure 13b is a schematic side view of the rear caster wheel of figure 13a;
Figure 14a is a schematic elevation view of the rear caster wheel of figure 12a in a second raised position;
Figure 14b is a schematic side view of the rear caster wheel of figure 14a;
Figure 15a is a schematic side view of a second embodiment of a rear caster wheel for a personal mobility vehicle according to the invention;
Figure 15b is a schematic elevation view of the rear caster wheel of figure 15a;
Figures 16a to 16c is a sequence showing side views of the rear caster wheel of figure 15a in different positions;
Figure 17a is a side view of a base frame member for a personal mobility vehicle according to the invention with a lowered front caster wheel;
Figure 17b is a side view of the base frame member of figure 17a with the front caster wheel raised;
Figure 18a is a detailed view of the front caster wheel of figure 17a;
Figure 18b is detailed view of the front caster wheel of figure 17b;
Figure 19a is a detailed view of a front caster wheel with a suspension system according to a second embodiment;
Figure 19b is a side view of the suspension system of figure 19a;
Figure 20 is a side view onto a front caster wheel according a third embodiment;
Figure 21 is a perspective side view onto a modular base frame connected to a seat carrying frame; and
Figure 22 is a perspective view onto the frames shown in figure 21.

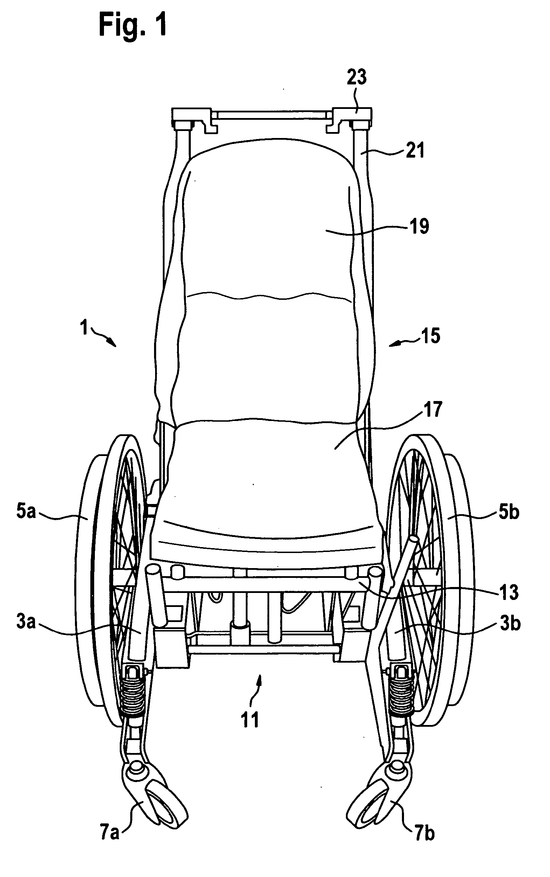

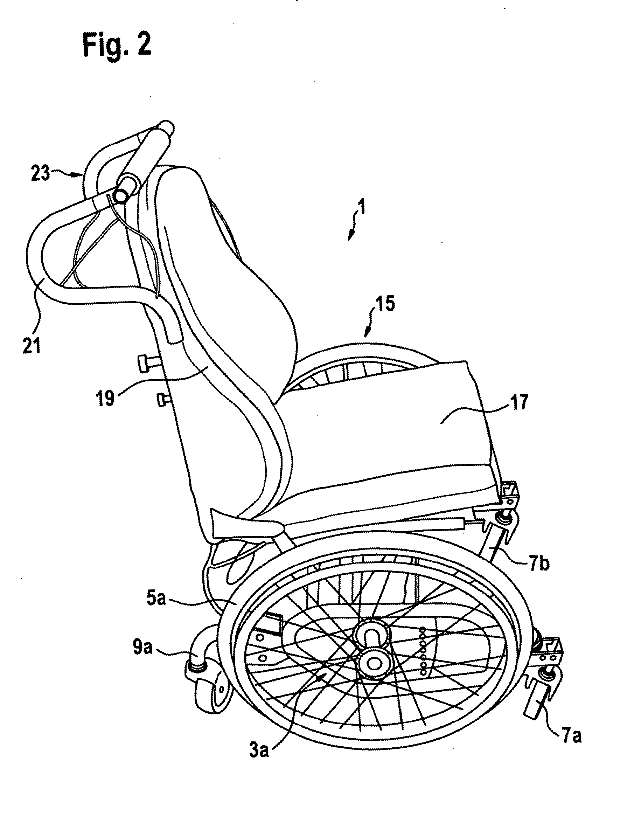

In figure 1 a first embodiment of a personal mobility vehicle according to the invention in form of a wheelchair 1 is shown. The wheelchair 1 comprises a base frame having a pair of base frame members 3a, 3b. Each of the base frame members comprises drive devices in form of primary support wheels 5a, 5b, front caster wheels 7a, 7b and, as shown in figure 2, rear caster wheels 9a, 9b from which only rear caster wheel 9a can be seen in figure 2. The base frame members 3a, 3b are connected to a seat carrying frame 11 as explained more detailed later. The seat carrying frame 11 comprises a mounting mechanism having a tilt frame 13. The mounting mechanism allows a two stage tilting of a seat 15 with respect to the base frame. The seat 15 comprises a seat frame member 17 defining a seating area and a backrest 19. The wheelchair 1 can be manoeuvered by a handle 21, wherein in the area of the handle 21 an operating device for the mounting mechanism in form of a rotating grip 23 is located.

In the above described way the wheelchair 1 has a two-stage-tilt, the function of which will be explained in detail later, a damped front caster wheel and releasable rear caster or anti-tip wheels and a modular construction.

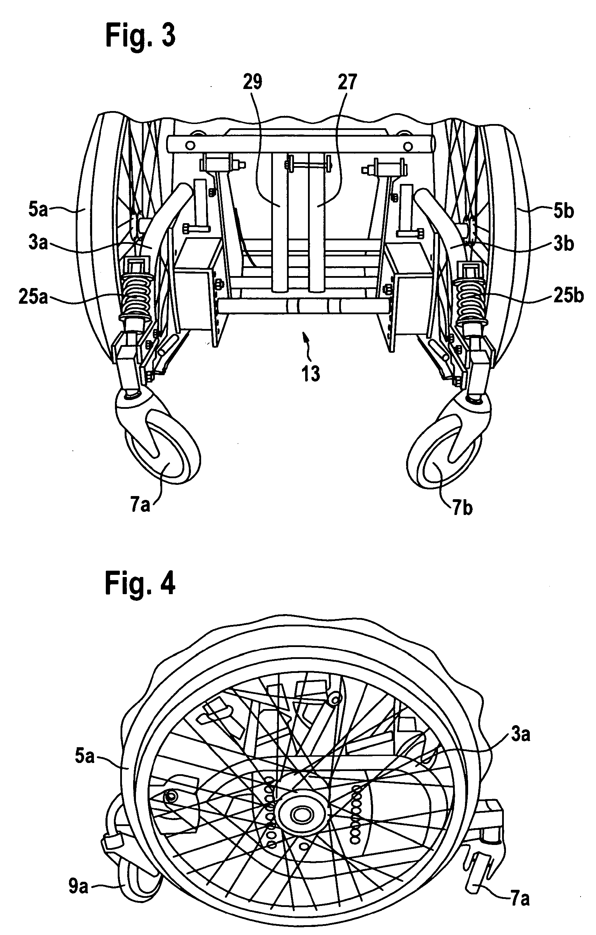

As especially shown in figure 3 the front caster wheels 7a, 7b are connected to the respective base frame member 3a, 3b via suspension systems 25a, 25b. Furthermore it can be taken from figure 3 that the tilt frame 13 comprises respective actuation members in form of gas springs 27, 29 allowing a tilting of seat frame element 17 with respect to the base frame members 3a, 3b and allowing a pivoting of the backrest 19 with respect to the seat frame member 17.

In figure 4 base frame member 3a is shown in more detail. Especially it can be taken from figure 4, that the primary support wheel 5a is centrally arranged on base frame member 3a.

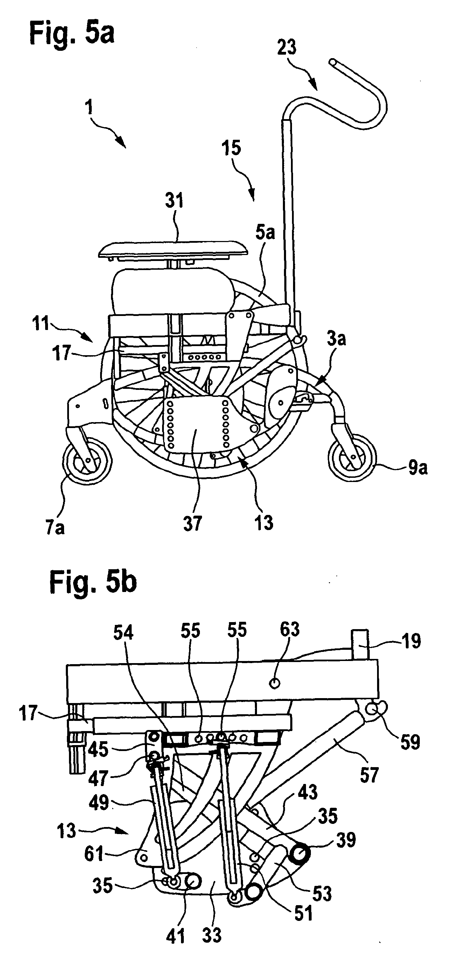

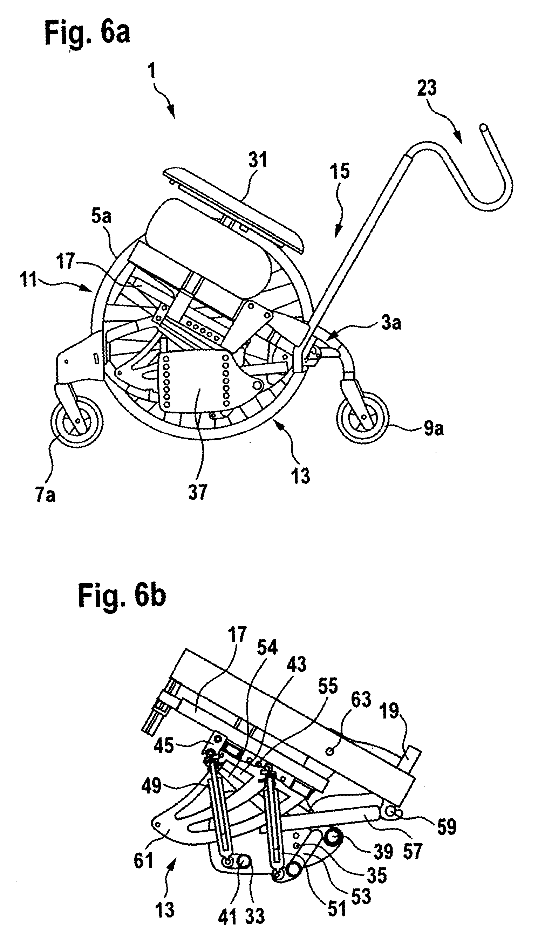

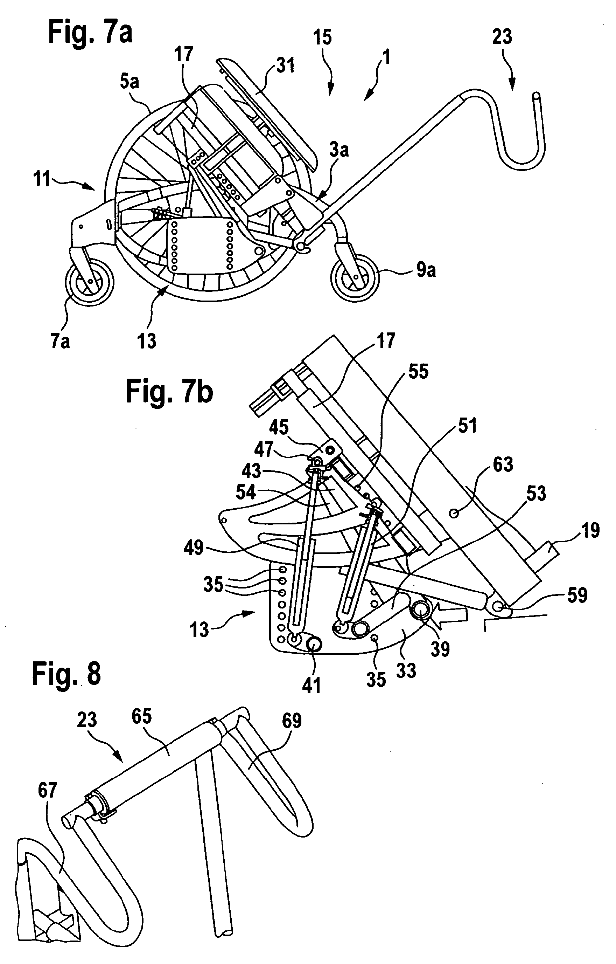

In the following the inventive first aspect of a personal mobility vehicle, the two tilt mechanism of the wheelchair 1, is explained with the help of figures 5a to 7b. To ease a view onto the mounting mechanism of wheelchair 1 in figures 5a, 6a and 7a base frame member 3b is not shown. Nevertheless in comparison to figures 1 to 4 in figures 5a, 6a, 7a an armrest 31 is mounted to seat 15. In figure 5a seat 15 is shown in a position in which the seat frame member 17 is in a normal position corresponding to a tilt angle of for example 0°. In figure 6a the seat frame member 17b has been tilted by a first actuation member in a first tilting step so that the tilt angle of the seat frame member 17 corresponds to a first tilt angle value, for example 30°. The seat frame member 17 can be tilted from the position shown in figure 6a into a position shown in figure 7a in a second tilting step by a second actuation member. By operating the second actuation member seat frame member 17 can be tilted to a maximum tilt angle, for example 50°.

As shown in more detail in figures 5b, 6b, 7b the tilt frame 13 comprises a tilt frame plate 33. The tilt frame plate 33 comprises a plurality of openings 35 to connect the tilt frame 13, as being a part of the seat carrying frame 11, to the base frame members 3a, 3b. Preferably this connection is made via a screw connection. The plurality of openings 35 allows an adaptation of the height of the seat carrying frame 11 and/or tilt frame 13 with respect to the base frame members 3a, 3b and thus with respect to a supporting surface of the wheelchair 1.

To allow a view onto the respective elements of the mounting mechanism in figures 5b, 6b and 7b the tilt frame plate 37 shown in figures 5a, 6a and 7a is not shown in figures 5b, 6b, 7b. The two tilt frame plates 33, 37 are connected via a first tilt frame rod 39 and a second tilt frame rod 41 to each other. The tilt frame 13 furthermore comprises a tilt frame strut 43. The tilt frame strut 43 is pivotable around a first pivot axis or second pivot point defined by the first tilt frame strut 39. Seat frame member 17 is indirectly connected to the tilt frame strut 43 via a connecting element 45 and is pivotable with respect to the tilt frame strut 43 about a first pivot point or second pivot axis 47.

The seat frame member 17 is furthermore connected to the tilt frame plate 33 via a first actuation member in form of a gas spring 49. The mounting mechanism furthermore comprises a second actuation member in form of a gas spring 51. Gas spring 51 is connected to the seat frame 17 and via an extension 53 to the tilt frame strut 43. To increase the rigidity of tilt frame strut 43 and to further fix the extension 53 with respect to tilt frame strut 43 both the extension 53 and the tilt frame strut 43 are connected to an enforcement sheet 54.

As can be seen in figure 5b the gas spring 51 can be mounted to the seat frame member 17 at different positions represented by respective apertures 55. This allows an adaptation of the mounting mechanism to respective needs of an occupant of the wheelchair 1, especially an adaptation to a weight of the occupant. Preferably gas spring 51 is connected to the seat frame member 17 by a screw connection extending through a respective aperture 55. By the respective aperture 55 a distance between a connection point of the gas spring 51 with the seat frame member 17 and the pivot axis 47 and thus a lever arm for the gas spring 51 may be altered.

To tilt the seat frame member 17 from the position shown in figure 5b in a first tilt step to the position shown in figure 6b the gas spring 51 representing the second actuation member is operated. By the reduction of the length of gas spring 51 seat frame member 17 is rotated about the second pivot axis 47. Thus second pivot axis 47 defines the tilt center point for a tilting from 0° to 30°. During this first pivoting of the seat 15 the tilt frame strut 43 remains mainly in one and the same position.

To operate gas spring 51 rotating grip 23 is operated. Due to the fact that the second pivot axis 47 is located in the forward half of the seat frame member 17 the front edge of seat frame member 17 and thus of seat 15 is raised only to a small extend. This allows an occupant of the wheelchair 1 to tilt the seat 15 also when sitting at a table as a tilting of seat 15 into the position shown in figure 6b will not lead to a contact of the knees of the occupant with the table.

In case a further tilting of seat 15 or seat frame member 17 is wanted the first gas spring 49 representing a first actuation member is operated. By increasing the length of gas spring 49 tilt frame strut 43 is rotated about the first pivot axis defined by tilt frame rod 39. Thus the first pivot axis defined by tilt frame rod 39 represents the tilt center point for a tilting from 30° - 50°. As can be seen by a comparison of figures 6b and 7b the increasing of the length of gas spring 49 leads to a further tilting of seat frame member 17 with respect to the base frame members 3a, 3b and thus with respect to a supporting surface of the wheelchair 1.

Thus the mounting mechanism of wheelchair 1 allows a two stage tilting of seat 15 so that a tilting of seat 15 over a wide range is possible. For example a first tilting is possible from 0 to 30° by actuating rear gas spring 51. After reaching a tilt of 30° the second gas spring 49 may be actuated to tilt the seat 15 to a tilt angle of for example 50°. Thus to actuate the tilt to 30°, a round grip 23 by the push handle 21 is turned and the gas spring 51 in the rear can move together. After 30° is reached, the front gas spring 49 is actuated to allow a tilting of the seat 15 to 50°. To go back to 0° tilt, rotating the grip 23 will actuate the front gas spring 49 to reach 30°, before the rear gas spring 51 pushes the seat up to 0°. In summary, this design allows 30° tilt without interference with the arm pad or arm rest 31 and the rear wheels 9a, 9b or the primary support wheels 5a, 5b and keeps the 30° pivot point 47 in the front to keep the users knees down, and actuates the 0 to 30° gas spring 51 before the 50° gas spring 49. In other embodiments of the invention, other rearward tilt ranges can be used. Especially the first and second tilt angle at which the next tilting step starts can be another angle than 30°.

As shown in figures 5b, 6b and 7b seat 15 of wheelchair 1 further comprises a third actuation member in form of a third gas spring 57. Gas spring 57 is connected to backrest 19 at a connection point 59 via a snap-in connection. Such a snap-in connection allows that the backrest 19 can be moved manually about the pivot axis 63, for example to fold together seat 15. The snap-in connection is than released and backrest 19 can be pivoted without the necessity of actuating gas spring 57. Furthermore gas spring 57 is connected to seat frame member 17 via a connecting element 61. By actuating gas spring 57 backrest 19 can be pivoted about pivot axis 63.

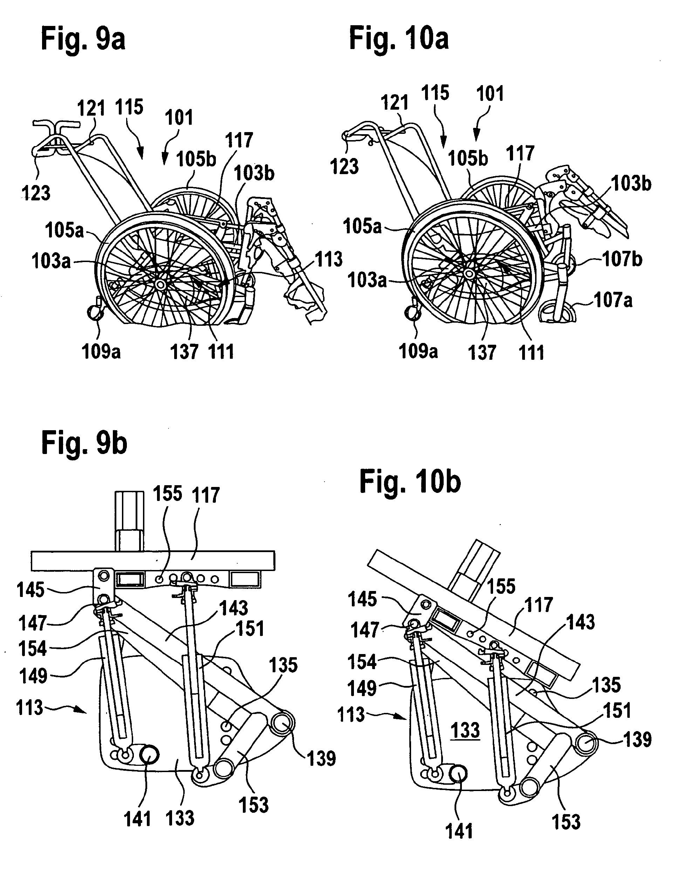

In figure 10 rotating grip 23 for tilting is shown in detail. Rotating grip 23 comprises a first operating devise 65. Operating device 65 is connected to gas springs 49 and 51. When actuating operating device 65, especially by rotating the same, in a first rotating range gas spring 51 is actuated until the gas spring 51 reaches a first operating position. This operating position corresponds to the tilt angle shown in figures 6a and 6b. By further rotating the operating device 65 gas spring 49 is actuated what leads to a further tilting of seat 15 until the tilt position shown in figures 7a and 7b is reached. To undue the tilting of seat 15 operating device 65 is rotated in an opposite direction until the gas spring 49 reaches a pre-determined second operating position corresponding to the tilt angle shown in figures 6a, 6b. By further back rotating operating device 65 gas spring 51 is actuated so that the tilt position shown in figures 5a, 5b is reached.

Rotating grip 23 furthermore comprises an operating device 67 for actuating gas spring 57 and another operating device 69 to actuate a not shown brake of wheelchair 1.

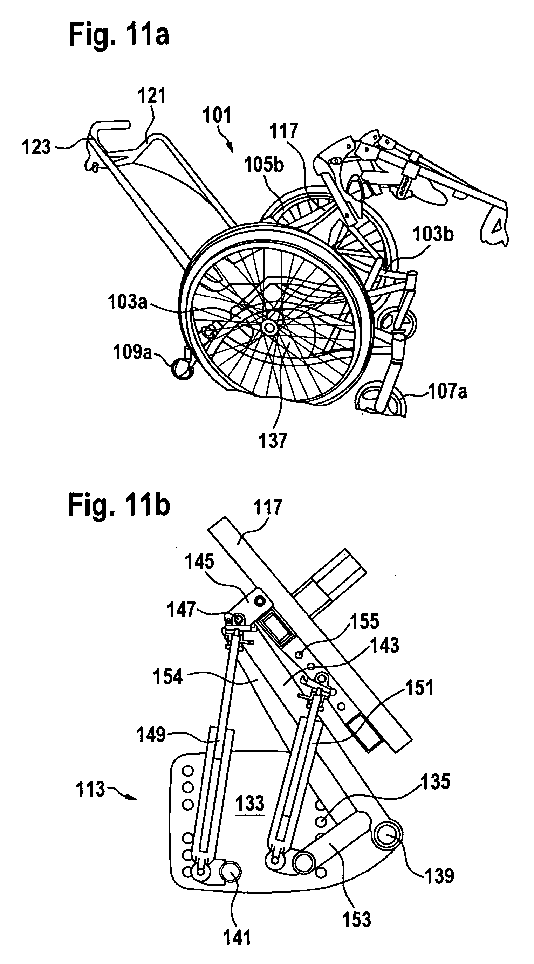

In figures 9a, 10a and 11a a personal mobility vehicle according to a second embodiment of the invention in form of a wheelchair 101 is shown. Elements corresponding to respective elements of wheelchair 1 have the same reference numbers but increased by 100. The functionality of the mounting mechanism of wheelchair 101 corresponds to the functionality of the mounting mechanism of wheelchair 1. Especially wheelchair 101 also allows at two stage tilting of seat 115. In figure 9a wheelchair 101 is shown in a normal tilt position of the seat 115 whereas in figure 10a wheelchair 101 is shown in a first tilt position after a first tilting, for example to 30°, backward. Wheelchair 101 is shown in figure 11 a in a second tilt position of the seat 115 after a second tilting, for example to 50°, backward. In figures 9b, 10b and 11b in more detail the elements of tilt frame 113 are shown. In figure 9b the elements are shown in the normal tilt position of seat 115 whereas in figure 10b elements of tilt frame 113 are shown in the position corresponding to the tilt position shown in figure 10a and in figure 11b the elements of tilt frame 113 are shown in a position corresponding to the tilt position shown in figure 11a. The mounting mechanism of wheelchair 101 differs from mounting mechanism of wheelchair 1 only in that it does not comprise a separate actuation member to move a backrest of wheelchair 101.

According to a further advantageous second aspect of the invention, which can be realized in combination with a two stage-tilt mechanism described before, a personal mobility vehicle, especially a wheelchair comprises releasable rear caster wheels. Especially in case the wheelchair comprises a primary support wheel being located mainly in the center of gravity of an occupant of the wheelchair a rear caster wheel is helpful in avoiding a tipping back of the wheelchair. Nevertheless it is helpful when overriding an obstacle with the wheelchair to change a distance of the rear wheel to a supporting surface of the wheelchair to allow a tipping back of the wheelchair within pre-determined limits. Thus it is for example desirable to bring a rear wheel into a first position allowing to override an object like a road curb, whereas the rear wheel should be locked in a second position in which it has contact with the ground when no obstacle should be overrode.

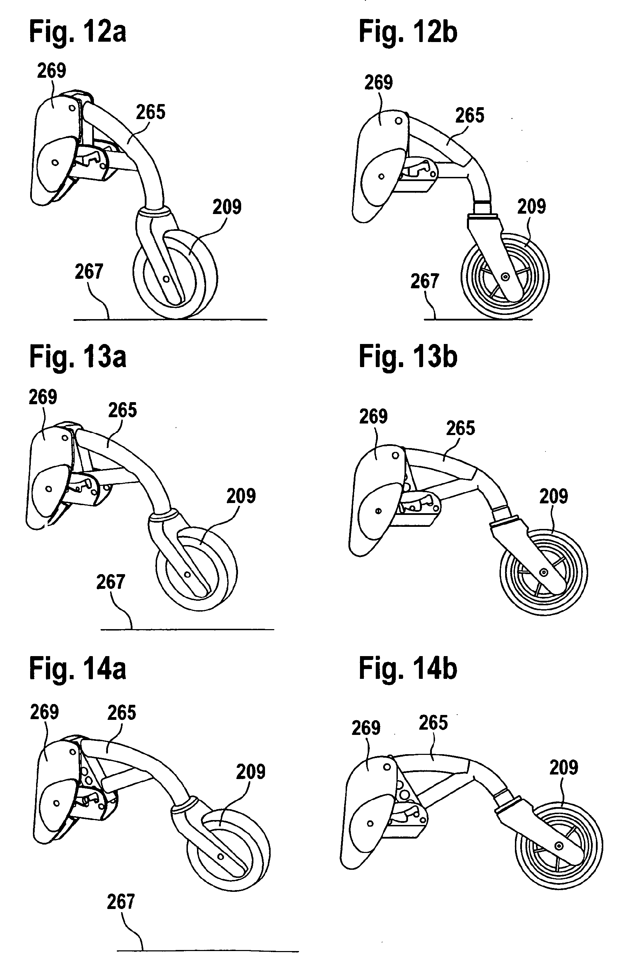

According to the second aspect of the invention a locking mechanism for a rear caster wheel is provided that allows a very comfortable manipulation of a rear caster wheel. In figures 12a and 12b a rear caster wheel 209 is shown. The rear caster wheel 209 is connected to a not shown base frame of the personal mobility vehicle, especially a wheelchair, via a rear anti-tip cube or caster arm 265. In figures 12a and 12b rear caster arm 265 is in a second position in which the rear caster wheel 209 is in contact with a supporting surface of the personal mobility vehicle in form of ground 267. The rear caster wheel 209 is thus in a drive position or is set at ground level. The rear caster wheel 209 is locked in this second position by a locking mechanism 269. The functionality of locking mechanism 269 will be explained later. By locking mechanism 269 caster arm 265 and thus rear caster wheel 209 can be brought in a first position shown in figures 13a, 13b. In this position rear caster wheel 209 is lifted with respect to ground 267, for example by a distance of 5 cm. The position in which rear caster wheel 209 is set at for example 5 cm up may be described as 5 cm curb stone position. This lifting of rear caster wheel 209 allows to override an obstacle, for example a road curb, with the wheelchair. Caster arm 265 and thus rear caster wheel 209 is also locked in this first position via locking mechanism 269.

The caster arm 265 and thus rear caster wheel 209 is forced into the first position shown in figures 13a, 13b by a first biasing device of the locking mechanism 269. Thus rear caster wheel 209 is moved from the second position shown in figures 12a and 12b automatically into the first position shown in figures 13a, 13b after a locking in the second position of figures 12a, 12b is released. It is also possible that further third positions are located between the first and second position in which the caster arm 265 and thus the rear caster wheel 209 may be locked by locking mechanism 269.

In case it is desired to override a higher obstacle, caster arm 265 and thus rear caster wheel 209 can be brought into a fourth position shown in figures 14a, 14b. In this fourth position the rear caster wheel 209 may be for example 12 cm above ground 267. This allows an overriding of higher obstacles with the wheelchair or an overriding of stairs with the wheelchair. The position in which the rear caster wheel 209 is set at, for example 12 cm, up may be described as 12 cm curb stone/steps position.

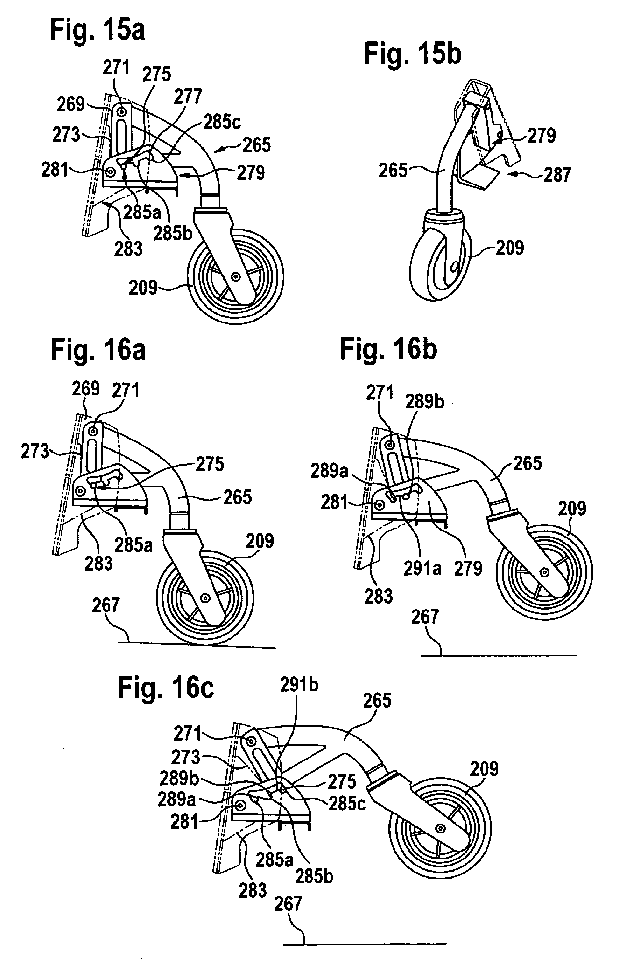

In the following, with the help of figures 15a to 16c, the functionality of the locking mechanism 269 is explained. Caster arm 265 is pivotable mounted so that it can rotate about a rotating axis 271. The locking mechanism 269 comprises a first biasing device in form of a flat spring 273. Connected to the caster arm 265 is a pin in form of a lock pin 275. The lock pin 275 is guided within a slot 277. Slot 277 is realised in form of a slotted link comprising notches in which lock pin 275 may be seated to lock caster arm 265 in respective positions. Slot 277 is formed within a lever 279. The lever 279 is pivotable about a rotating axis 281. Locking mechanism 269 furthermore comprises a second biasing device in form of a flat spring 283. Flat spring 283 forces the lever 279 in a direction upward or counter clockwise in figure 15a. This leads to the result that the look pin 275 is forced by flat spring 283 into respective notches 285a, 285b, 285c formed within slot 277. In figure 15a look pin 275 is forced into a notch 285a. As shown in figure 15b lever 279 may comprise an extension in form of a pedal 287 to allow an actuation of the lever 279 by foot, especially for releasing the lock.

With the help of figures 16a to 16c in the following a manipulation of the rear caster wheel 209 is described. Figure 16a shows the caster arm 265 in a second position. In this second position the caster arm 265 is secured against the force of the first flat spring 273 as the second flat spring 283 forces lock pin 275 into notch 285a so that lock pin 275 can not move within slot 277. Due to the special form of notch 285a the lock pin 275 can not override an elevation 289a, for example shown in figure 16b. To transfer the caster arm 265 and thus rear caster wheel 209 into the position shown in figure 16b lever 279 is actuated for example by pressing down pedal 287. When pressing down pedal 287 lever 279 forming a lock for the rear anti-tip wheel 209 is rotated about rotating axis 281 against the force of flat spring 283. This allows pin 275 to override the elevation 289a. As look pin 275 can thus move freely within slot 277 caster arm 265 is pivoted around rotating axis 271. Thus stepping on pedal 287 downwards will move the anti-tip tube or caster arm 265 for example 5 cm upwards. This movement is spring loaded as caused by the force of flat spring 273. Furthermore due the force built up by flat spring 283 lever 279 is forced in an upward direction so that pin 275 is guided along an inclination 291 a formed within slot 277 until it reaches notch 285b and is stopped at an elevation 289b. Thus lock pin 275 is in the middle of the lock formed by lever 273 and is spring loaded kept there. In this first position rear caster wheel 209 for example has a distance of 5 cm from ground 267. By forming additional notches within slot 277 further third positions can be defined in which caster arm 265 can be locked by locking mechanism 269 between the first position shown in figure 16b and the second position shown in figure 16a.

When actuating pedal 287 again and thus moving lever 279, lock pin 275 is released from the position shown in figure 16b and by the force of flat spring 273 caster arm 265 is pivoted further about rotating axis 271 into the position shown in figure 16c. In this fourth position look pin 275 is maintained in notch 285c and a distance of the rear caster wheel 209 from ground 267 could be for example 12 cm to allow to override higher objects or to override steps with the wheelchair. Thus stepping again on the pedal 287 allows the lock pin 275 to move to rear of slot 277 or lever lock 279 and keeps the anti-tip tube for example 12 cm up.

In an alternative embodiment flat spring 273 is adapted to hold rear caster arm 265 in the position shown in figure 16b. In this embodiment slot 277 may be formed alternatively not having an elevation 289b but having an inclination towards notch 285c. This allows a movement of caster arm 265 by manually lifting caster arm 265 into the fourth position shown in figure 16c without the necessity to actuate lever 279 or pedal 287. By an elevation formed in slot 277 in the region of notch 285c a backward moving of lock pin 275 or caster arm 265 into the first position is prohibited. To release caster arm 265 from this fourth position shown in figure 16c in this alternative embodiment lever 279 has to be actuated so that lock pin 275 leaves notch 285c and that rear caster arm 265 is hold in the position shown in figure 16b by the force of flat spring 273.

To a transfer caster arm 265 from the position shown in figure 16c into the position shown in figure 16b in the shown embodiment caster arm 265 is pressed downward. This leads to the result that lock pin 275 leaves notch 285c, as guided along an inclination 291b, and reaches against the force of spring 273 again notch 285b. A further down pressing of caster arm 265 guides lock pin 275 via the inclination 291a into notch 258a where it is locked so that caster wheel 209 is again in the position shown in figure 16a. Thus a pressing down, for example stepping on the caster arm 265, will make the lock pin 275 slip out of position and allows the caster arm 265 to go back to ground 267. In this position the lock in 275 is again in the front position of the locking mechanism 269.

Thus the construction of a locking mechanism 269 allows to move rear caster wheel 209 by actuating lever 279 especially via pedal 287 and by pressing down caster arm 265. Thus the relative position of the rear caster wheel 209 with respect to a ground level 267 may be adjusted simply by one actuation action. In the above described alternative embodiment a person operating the wheelchair may only have to lower the foot to operate pedal 287 or to lower caster arm 265 or by lifting the foot to raise rear caster wheel 209 so that caster arm 265 is locked in the wanted position by locking mechanism 269.

To keep the anti-tip or rear caster wheel in the required position, the use of a clamping bolt, a chain, a pin or other means can also be used. In summary by stepping on the lever 279, such as pedal 287, the arm 265 for the anti-tip wheel 209 of the invention will be unlocked and it can be swung upward. A spring 273 is used to assist the lifting of the anti-tip wheel 209. The locking mechanism 269 comprises the slot 277 inside the lever lock 279, to keep the anti-tip wheel 209 in one of several positions with respect to the ground 267. During normal operation, the anti-tip wheel is typically on the ground 267 or is raised above the ground by a first distance, such as for example 2 cm, off the ground. The first time the pedal 287 is stepped on, the pin 275 moves from the first notch 285a to the second notch 285b, allowing the anti-tip wheel 209 to move up the first increment or amount, such as, for example, 5 cm off the ground 267. The second time the pedal is stepped on, the pin 275 moves from the second notch 285b to the third notch 285c, allowing the anti-tip wheel 209 to move up a second increment, such as, for example, to a position where the wheel 209 is off the ground by 12 cm. Stepping on the anti-tipping wheel 209 or caster arm 265 will automatically release it and move it downward where it will be locked again.

Although above locking mechanism 269 is explained allowing only an unlocking of one rear caster wheel, in alternative embodiments of the personal mobility vehicle at least two locking mechanisms of two rear caster wheels may be coupled. For example it is possible to connect mechanically respective levers or pedals of the locking mechanisms so that an actuation of a lever or pedal of one locking mechanism leads to an unlocking of both rear caster wheels so that they are automatically lifted up. Furthermore also the caster arms of at least two rear caster wheels may be mechanically connected so that a slipping on one rear caster arm leads to a movement of both rear caster wheels.

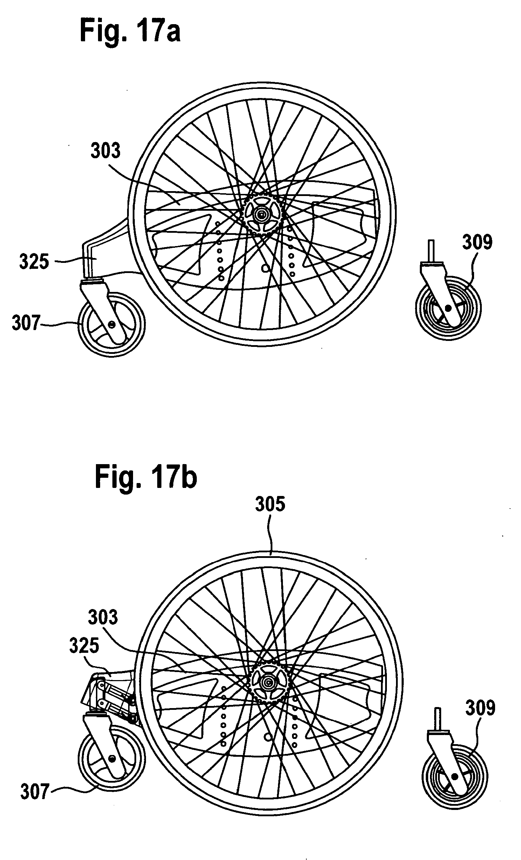

In some situations it may be desirable when overriding an obstacle with the wheelchair to avoid the necessity of moving a rear caster wheel. Especially for these situations the application proposes a front caster wheel being connected via a suspension system to a base frame of the wheelchair. Such a damped front caster wheel may be used together with a moveable rear caster wheel as described above. In figure 17a, 17b a base frame member 303 of a personal mobility vehicle according to the invention and comprising a front caster wheel 307 is shown. Front caster wheel 307 is connected to the base frame member 303 by a suspension system 325. In figures 17a, 17b a connection of a rear caster wheel 309 to the base frame member 303 is not shown. This connection may be rigid or via a locking mechanism as described above. In figure 17a front caster wheel 307 is shown in a position in which it contacts the ground. When driving over an obstacle not higher than a predetermined height, for example 5 cm, the front caster suspension system 325 will absorb the impact and will raise the front caster wheel 307 into the position shown in figure 17b. By the raising of front caster wheel 307 a primary support wheel 305 of base frame member 303 and rear caster wheel 309 that is locked in a position that prevents the wheelchair from tipping backwards, will be kept in contact with the ground for save manoeuvrability, A tipping back of the wheelchair can especially arise when the primary support wheel 305 is located around a centre of gravity of the wheelchair.

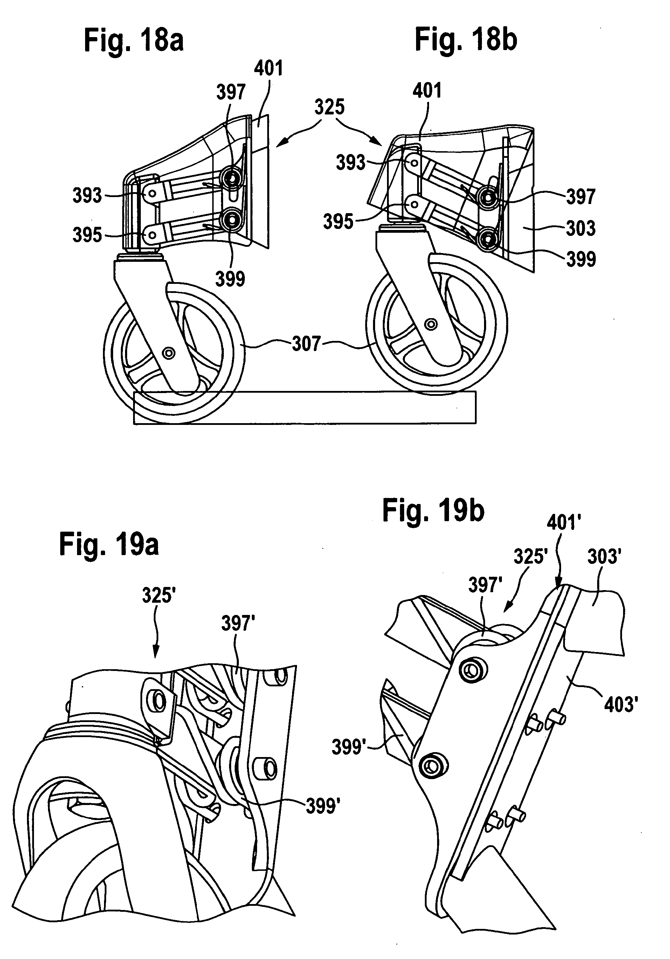

In figures 18a and 18b the movement of the front caster wheel 307 via the suspension system 325 is shown in more detail. Suspension system 325 especially comprises an upper link 393 and a lower link 395. Upper link 393 and lower link 395 are biased by a third biasing device in form of springs 397, 399. The suspension system 325 is covered by a housing 401'. In this way the base frame member 30 and upper link 393 and lower link 395 are forming a 4-bar link.

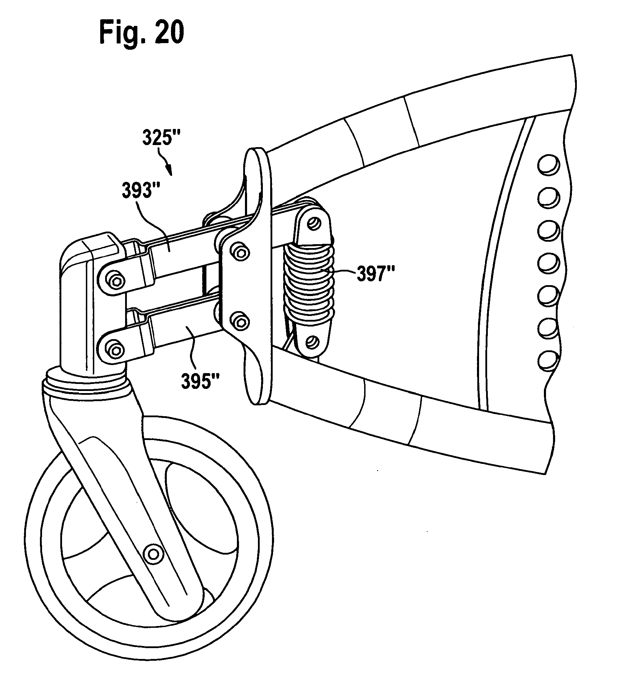

In figures 19a, 19b and 20 different realisations of the third biasing device are shown. In the embodiment shown in figures 19a, 19b of a suspension system 325' the ends of springs 393' 399' are extending through a back side wall of a caster housing 401. This back side wall may be formed by a base frame member 303'. This allows that springs 397', 399' are supported by a reinforcement element 403' that could be made of a material harder than the material of the base frame 303' or backside wall of caster housing 401'. In the alternative embodiment of a suspension system 325" shown in figure 20 only an upper link 393" is biased by a spring 397", whereas lower link 395'" is not spring biased.

Thus a suspension system for a front caster wheel of the personal mobility vehicle, especially a wheelchair, is an advantageous feature of the personal mobility vehicle. The base frame of the wheelchair may consist of a drive wheel which is located around the centre of the wheelchair, i.e., at a mid position. A fixed or locked mount rear caster prevents the chair from tipping backwards whereas a front caster has a built-in suspension. When driving over an obstacle not higher than 5 cm, the front caster suspension will adsorb the impact and will keep all wheels / casters in contact with the ground for safe manoeuvrability. As shown in figures 17a, 17b, 18a and 18b the suspension may include a boomerang-shaped spring, although springs of other designs can be used.

A further third aspect of the personal mobility vehicle of the invention, that can be realised together with the two stage tilt described above and together or alternatively with the releasable rear caster wheel described above, pertains the easy adaptation of a personal mobility vehicle, especially wheelchair, to the needs of a respective user. For example it is necessary to adapt a wheelchair to a width of a seat with respect to the constitution of the person using the wheelchair. In the wheelchair constructions known in the state of the art the construction of the whole wheelchair has to be adapted so that wheelchairs are mostly custom made products.

With the invention is proposed to construct the wheelchair of predefined modular elements. Especially it is proposed that an especially not self supporting base frame comprises a pair of separate base frame elements.

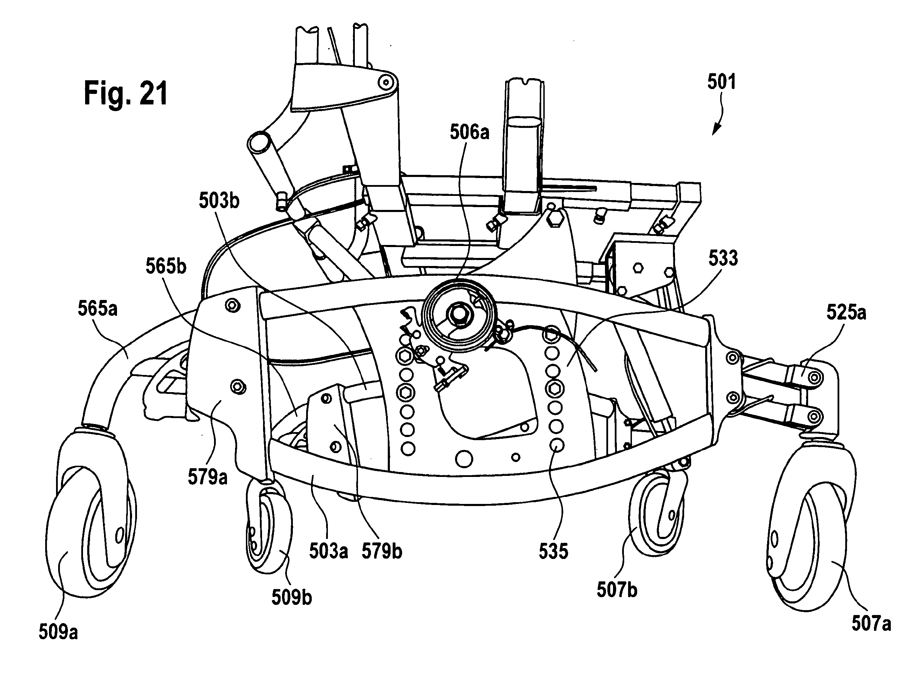

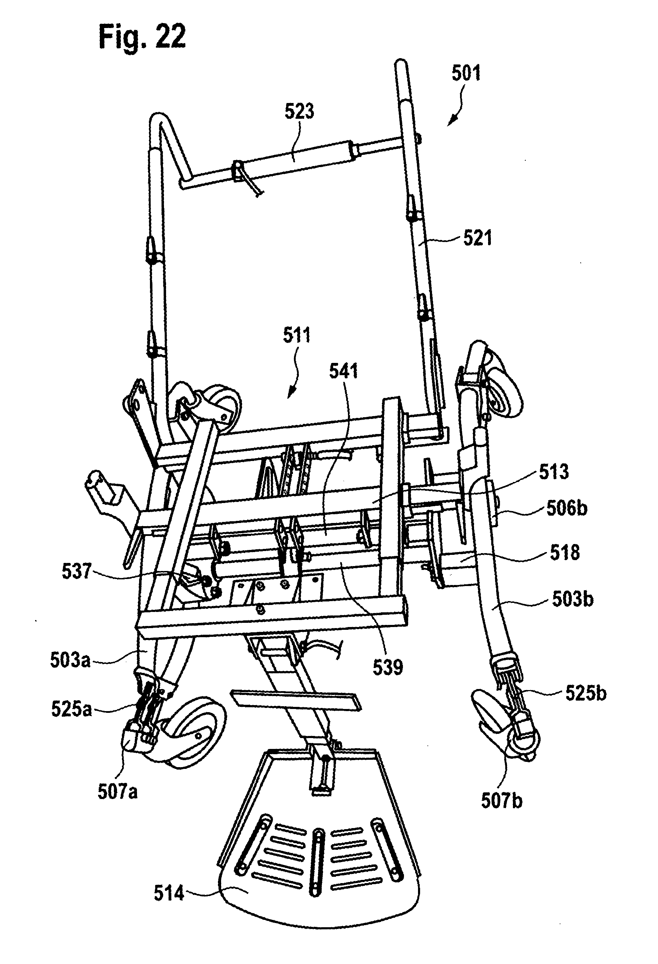

In figures 21 and 22 respective elements of a personal mobility vehicle in form of a wheelchair 501 are shown. Elements of wheelchair 501 corresponding to respective elements of wheelchair 1 have the same reference numbers, but increased by 500. As can be seen in figures 21 and 22 base frame members 503a, 503b comprise front caster wheels 507a, 507b connected to the base frame members 503a, 503b, especially by a suspension system 525a, 525b as described above. Furthermore base frame members 503a, 503b comprise rear caster wheels 509a, 509b that are especially connected to the base frame members 503a, 503b via caster arms 565a, 565b and locking mechanisms 579a, 579b. Furthermore primary support wheels, not shown in figures 21 and 22, may be connected to base frame members 503a, 503b at receptacles 506a, 506b for axles of primary support wheels. The base frame members 503a, 503b are connected to a seat carrying frame 511. As especially shown in figure 22 the seat carrying frame 511 comprises a handle 521 for manoeuvring of the wheelchair, a foot rest 514 and a tilt frame 513.

The tilt frame 513 can be connected to different seats having different seat widths. In common wheelchairs the use of a wider seat makes the adaptation of a self carrying base frame necessary to increase the distance between primary support wheels to avoid a contact of the seat with the wheels. Nevertheless it is not necessary to change the base frame elements of wheelchair 501 when using seats of different widths. As the base frame members 503a, 503b are independent from each other, especially not connected to each other beside via seat carrying frame 511, one and the same base frame members 503a, 503b can be used for different seat widths. To adapt the base frame to a different seat width the base frame members 503a, 503b are connected to the seat carrying frame 511 via interchangeable spacers 518. Thus one and the same seat carrying frame 511 and one and the same base frame members 503a, 503b can be used for different seats and an easy adaptation of the wheelchair to different seats is possible. Furthermore it is not necessary to stock different base frames for different seats having different widths. Thus by the modular construction of the wheelchair shown in figures 21, 22 the production costs of the wheelchair can be reduced significantly.

In a preferred alternative embodiment the base frame members may be adjustable in length. In this way an adaptation of the position of rear caster wheels and/or front caster wheels may be possible, for example when seats of different seat depths are used.

In another alternative embodiment the seat frame members are connected to the seat carrying frame at a front and rearward side of the seat carrying frame with regard to a seating direction instead of being arranged at a right and a left side. This allows one of the base frame members to carry at least a pair of wheels like front caster, rear caster or primary support wheels. By connecting the base frame member to the seat carrying frame via spacers having different lengths the position of the respective wheels with regard to the seat carrying frame may be adapted. Especially an adaptation to different seat depths of the used seat becomes possible. So it may be ensured that a pair of primary support wheels is located in the middle of the personal mobility vehicle and/or that the centre of gravity of an occupant is located in the area of an, at least hypothetical, axle of the primary support wheels. So without further constructional provisions a good manoeuvrability of the wheelchair is guaranteed although seats of different seating depths are used.

The features of the invention as disclosed in re-above description, in the drawings and in the claims may be essential for the implementation of the varying embodiments of the invention individually or in any desired combination.

### Reference sign list

- 1: wheelchair
- 3a, 3b: base frame member
- 5a, 5b: primary support wheel
- 7a, 7b: front caster wheel
- 9a, 9b: rear caster wheel
- 11: seat carrying frame
- 13: tilt frame
- 15: seat
- 17: seat frame member
- 19: backrest
- 21: handle
- 23: rotating grip
- 25a, 25b: suspension system
- 27: gas spring
- 29: gas spring
- 31: arm rest
- 33: tilt frame plate
- 35: opening
- 37: tilt frame plate
- 39: tilt frame rod
- 41: tilt frame rod
- 43: tilt frame strut
- 45: connecting element
- 47: pivot axis
- 49: gas spring
- 51: gas spring
- 53: extension
- 54: enforcement sheet
- 55: aperture
- 57: gas spring
- 59: connection point
- 61: connecting element
- 63: pivot axis
- 65: operating device
- 67: operating device
- 69: operating device

- 101: wheelchair
- 103a, 103b: base frame member
- 105a, 105b: primary support wheel
- 107a, 107b: front caster wheel
- 109a, 109b: rear caster wheel
- 111: seat carrying frame
- 113: tilt frame
- 115: seat
- 117: seat frame member
- 121: handle
- 123: rotating grip
- 133: tilt frame plate
- 13 5: opening
- 137: tilt frame plate
- 139: tilt frame rod
- 141: tilt frame rod
- 143: tilt frame strut
- 145: connecting element
- 147: pivot axis
- 149: gas spring
- 151: gas spring
- 153: extension
- 154: enforcement sheet
- 155: aperture

- 209: rear caster wheel
- 265: caster arm
- 267: ground
- 269: locking mechanism
- 271: rotating axis
- 273: flat spring
- 275: lock pin
- 277: slot
- 279: lever
- 281: rotating axis
- 283: flat spring
- 285a, 285b, 285c: notch
- 287: pedal
- 289a, 289b: elevation
- 291a,291b: inclination

- 303, 303': base frame member
- 305: primary support wheel
- 307: front caster wheel
- 309: rear caster wheel
- 325, 325', 325": suspension system
- 393, 393": upper link
- 395, 395": lower link
- 397, 397', 397": spring
- 399, 399': spring
- 401, 401': housing
- 403': reinforcement element

- 501: wheelchair
- 503a, 503b: base frame member
- 506a, 506b: receptacle
- 507a, 507b: front caster wheel
- 509a, 509b: rear caster wheel
- 511 1: seat carrying frame
- 513: tilt frame
- 514: footrest
- 518: spacer

- 521: handle
- 523: rotating grip
- 525a, 525b: suspension system
- 533: tilt frame plate
- 535: opening
- 537: tilt frame plate
- 539: tilt frame rod
- 541: tilt frame rod
- 565a, 565b: caster arm
- 579a, 579b: locking mechanism

## Claims

1. A personal mobility vehicle (1, 101, 501) having a two stage tilt ability comprising at least one base frame (3a, 3b, 103a, 103b, 303, 303', 503a, 503b), at least one seat (15, 115) mounted with respect to the base frame (3a, 3b, 103a, 103b, 303, 303', 503a, 503b) for tilting rearward and a mounting mechanism (13, 113, 513) for the seat configured to enable rearward tilting of the seat (15, 115), **characterized in that** the mounting mechanism (13, 113, 513) is adapted to rearward tilt the seat (15, 115) by a first pivoting of the seat (15, 115) through a first range of tilting, the first pivoting being about a first pivot point (47, 147) and a second pivoting of the seat (15, 115) through a second range of tilting, the second tilting being about a second pivot point (39,139).

2. Personal mobility vehicle according to claim 1, **characterized in that**
the seat (15, 115) comprises at least one seat frame member (17, 117) and the mounting mechanism comprises at least one first actuation member (49, 149) to alter the tilt of the seat frame member (17, 117) with respect to the base frame (3a, 3b, 103a, 103b), wherein especially the mounting mechanism further comprises at least one tilt frame (13, 113, 513) with at least one tilt frame strut (43, 143), the tilt frame strut (43, 143) is preferably at least indirectly connected to the base frame (3a, 3b, 103a, 103b) to be pivotable around at least one first pivot axis (39, 139) defining the second pivot point, wherein preferably the first pivot axis (39, 139) is fixed with respect to the base frame (3a, 3b, 103a, 103b) at least during a pivoting of the tilt frame strut (43, 143) with respect to the base frame (3a, 3b, 103a, 103b), and/or the tilt frame strut (43, 143) is preferably at least indirectly connected to the seat frame member (17, 117) so that the seat frame member (17, 117) is pivotable around at least one second pivot axis (47, 147) with respect to the tilt frame strut (43, 143), wherein especially the second pivot axis (47, 147) defines the first pivot point, and/or the mounting mechanism further comprises at least one second actuation member (51, 151) connected to the seat frame member (17, 117) and the tilt frame strut (43, 143) to pivot the seat frame member around the second pivot axis (47, 147), wherein preferably the position of the second pivot axis (47, 147) with respect to the base frame (3a, 3b, 103a, 103b) is alterable by the first actuation member (49, 149) and the first actuation member (49, 149) is especially at least indirectly connected to the tilt frame strut (43, 143) and at least indirectly connected to the base frame (3a,3b, 103a, 103b).

3. Personal mobility vehicle according to claim 1 or 2, **characterized in that**
the first pivot point (47, 147) is positioned forward of the second pivot point (39, 139), especially with respect to a direction of seating of an occupant of the personal mobility vehicle (1, 101).

4. Personal mobility vehicle according to one of the preceding claims, **characterized in that**
the position of the second pivot axis (47, 147) with respect to the base frame (3a, 3b, 103a, 103b) is alterable by pivoting the tilt frame strut (43, 143) about the first pivot axis (39, 139) by the first actuation member (49, 149).

5. Personal mobility vehicle according to one of the preceding claims, **characterized in that**
the base frame (3a, 3b, 103a, 103b) is functionally connected to, especially supported by, at least one drive device, especially in form of at least one wheel (5a, 5b, 105a, 105b), at least on caster (7a, 7b, 107a, 107b, 307, 507a, 507b, 9a, 9b, 109a, 109b, 209, 509a, 509b), at least one chain drive and/or at least one crawler drive, wherein the drive device is preferably realised by a pair of opposed primary support wheels (5a, 5b, 105a, 105b) positioned approximately at the center of the personal mobility vehicle (1, 101).

6. Personal mobility vehicle according to one of the preceding claims, **characterized in that**
the tilt frame (13, 113, 513) comprises at least one tilt frame plate (33, 37, 133, 137, 533, 537), wherein the tilt frame plate is at least partly comprised by the base frame or the tilt frame plate (33, 37, 133, 137, 533, 537) is detachable attached to the base frame (3a,3b, 103a, 103b, 503a, 503b), especially to alter a position, like a horizontal position, a vertical position or an angle, of the tilt frame (13, 113, 513) with respect to the base frame (3a, 3b, 103a, 103b, 503a, 503b).

7. Personal mobility vehicle according to one of the claims 2 to 6, **characterized in that** the first actuation member (49, 149) is, preferably detachable, connected at least indirectly to the base frame (3a, 3b, 103a, 103b) or the tilt frame plate (33, 37, 133, 137) at at least one first connection point and/or is, preferably detachable, connected at least indirectly to the tilt frame strut (43, 143) at at least one second connection point, wherein especially a distance between the first pivot axis (39, 139) on the one hand and the first connection point and/or the second connection point on the other hand is alterable.

8. Personal mobility vehicle according to claim 7, **characterized in that**
the second connection point is located in the area of the second pivot axis (47, 147).

9. Personal mobility vehicle according to one of the preceding claims, **characterized in that**
the tilt frame (13, 113, 513) further comprises at least one first tilt frame rod (39, 139, 539) defining the first pivot axis, wherein preferably the first tilt frame rod (39, 139, 539) is formed as an axle and/or the tilt frame strut (43, 143) is pivotable about the first tilt frame rod (39, 139, 539).

10. Personal mobility vehicle according to one of the claims 6 to 9, **characterized in that** the tilt frame (13, 113, 513) comprises at least two tilt frame plates (33, 37, 133, 137,
533, 537), wherein the tilt frame plates (33, 37, 133, 137, 533, 537) are preferably connected to each other via the first tilt frame rod (39, 139, 539), wherein especially the tilt frame (13, 113, 513) comprises at least one second tilt frame rod (41, 141, 541), preferably a plurality of second tilt frame rods, connecting the two tilt frame plates (33, 37, 133, 137, 533, 537) to each other.

11. Personal mobility vehicle according to one of the preceding claims, **characterized in that**
the first pivot axis (39, 139) is, at least temporarily, located in a rearward half of the seat frame member (17, 117), especially located behind the seat frame member (17, 117), with respect to a direction of seating of the seat (15, 115) and/or the second pivot axis (47, 147) is, at least temporarily, located in a forward half of the seat frame member (17, 117), especially located in front of the seat frame member (17, 117), with respect to a direction of seating of the seat (15, 115).

12. Personal mobility vehicle according to one of the preceding claims, **characterized in that**
the second actuation member (51, 151) is connected to the tilt frame strut (43, 143) via at least one extension (53, 153), wherein the extension (53, 153) extends preferably mainly perpendicular to the tilt frame strut (43, 143) and/or the extension (53, 153) is connected to the tilt frame strut (43, 143) in the area of the first pivot axis (39, 139).

13. Personal mobility vehicle according to claim 12, **characterized in that**
the tilt frame strut (43, 143) comprises at least one enforcement sheet (54, 154), preferably attached to the extension (53, 153) and/or **in that** the tilt frame strut (43, 143) is tubular.

14. Personal mobility vehicle according to one of the preceding claims, **characterized in that**
the second actuation member (51, 151) is, preferably detachable, connected at least indirectly to the seat frame member (17, 117) at at least one third connection point (55, 155) and/or is, preferably detachable, connected at least indirectly to the tilt frame strut (43, 143) at at least one fourth connection point, wherein especially at least one distance between the second pivot axis (47, 147) and the third connection point (55, 155) and/or at least one distance between the first pivot axis and the fourth connection point is alterable.

15. Personal mobility vehicle according to one of the preceding claims, **characterized in that**
the seat (15) comprises at least one backrest (19) pivotable about at least one third pivot axis (63) and connected at least indirectly to the seat frame member (17, 117), wherein preferably at least one tilt of the backrest (19) with respect to the seat frame member (17, 117) is alterable by at least one third actuation member (57) to pivot the backrest (19) about the third pivot axis (63).

16. Personal mobility vehicle according to one of the preceding claims, **characterized in that** the third actuation member (57) is, preferably detachable, at least indirectly connected to the seat frame member (17) at at least one fifth connection point and/or the third actuation member (57) is, preferably detachable, at least indirectly connected to the backrest (19) at at least one sixth connection point, wherein preferably at least one distance between the third pivot axis (63) on the one hand and the fifth connection point and/or the sixth connection point on the other hand is alterable and/or a connection of the third actuation member (63) to the seat frame member (17) and/or to the backrest (19) is automatically detachable when the backrest (19) is pivoted manually.

17. Personal mobility vehicle according to one of the preceding claims, **characterized in that**
the first connection point, the second connection point, the third connection point, the fourth connection point, the fifth connection point, the sixth connection point and/or at least one connection point between at least one tilt frame plate (33, 133, 37, 137, 533, 537) and the base frame (3a,3b, 103a, 103b, 503a, 503b) comprises at least one bolted connection, at least one screw coupling, at least one plug connection, at least one snap-on connection, at least one form-fit connection and/or at least one force-fit connection.

18. Personal mobility vehicle according to one of the preceding claims, **characterized in that**
at least one height of the seat (15, 115) with respect to a support surface is adjustable, especially a height of the seat frame (15, 115) and/or the tilt frame (13, 113) with respect to a support surface and/or the base frame (3a, 3b, 103a, 103b) is adjustable, preferably by altering at least one mount position of the tilt frame (13, 113), especially of the tilt frame plate (33, 37, 133, 137), with respect to the base frame (3a, 3b, 103a, 103b).

19. Personal mobility vehicle according to one of the preceding claims, **characterized in that**
the first actuation member, the second actuation member and/or the third actuation member comprise(s) at least one spring element, preferably comprising at least one gas spring (49, 149, 51, 151), at least one motor drive at least one locking device, at least one latching device and/or at least one worm gear drive and/or a first, rear gas spring (51, 151) is mounted to control the first pivoting and a second, forward gas spring (49, 149) is mounted to control the second pivoting.

20. Personal mobility vehicle according to one of the preceding claims, **characterized in that**
the first actuation member (51, 151) is only operable when the second actuation member (49, 149) is in at least one predetermined first operating condition, especially in at least one first operating position, and/or the second actuation member (49, 149) is only operable when the first actuation member (51, 151) is in at least one predetermined second operating condition, especially in at least one second operating position and/or the first actuation member (51, 151) and the second actuation member (49, 149) are not operable simultaneously.

21. Personal mobility vehicle according to claim 20, **characterized in that**
the first operating condition is defined by at least one tilt angle of the seat frame member (17, 117) with respect to at least one normal position, especially the first operating condition is fulfilled when the tilt angle and/or the modulus of the tilt angle of the seat frame member (17, 117) is equal to or larger than a first tilt angle value and/or the second operating condition is fulfilled when the tilt angle and/or the modulus of the tilt angle of the seat frame member (17, 117) is equal to or less than a second tilt angle value, wherein preferably the first tilt angle value is equal to the second tilt angle value.

22. Personal mobility vehicle according to one of the preceding claims, **characterized in that**
the first range of motion is from about 0 to about 30 degrees, and the second range of motion is from about 30 degrees to about 50 degrees and/or the normal position of the seat frame member corresponds to an tilt angle of 0° and/or the first tilt angle value and/or the second tilt angle value is/are in an interval of 10° to 50°, preferably 20° to 40°, more preferably 25° to 35° and most preferably in the interval of 29° to 31°.

23. Personal mobility vehicle according to one of the preceding claims, **characterized in that**
the first actuation member (49, 149) is operable via at least one first operation device (65) and the second actuation member (51, 151) is operable via at least one second operation device (65), wherein preferably the first operating device (65) is not actuatable by an operator, especially by exerting a pre-load to the first operating device (65), as long as the second actuation member (51, 151) is not in the first operating condition and/or the second operating device is not actuatable by an operator, especially by exerting a pre-load to the second operating device (65), as long as the first actuation member (49, 149) is not in the second operating condition.

24. Personal mobility vehicle according to one of the preceding claims, **characterized in that**
the first operating device and the second operating device are at least partly identical, preferably the first operating device and the second operating device are formed by a handle (65), wherein especially the handle acts in a first actuation interval as the second operating device and the handle acts in a second actuation interval as the first operating device.

25. Personal mobility vehicle according to one of the claims 23 to 25, **characterized in that** the first operating device comprises at least one first rotating grip (65) and/or the second operating device comprises at least one second rotating grip (65).

26. Personal mobility vehicle according to one of the claims 23 to 25, **characterized in that** the first operating device and/or the second operating device are provided next to at least one handle (21) of the personal mobility vehicle (1), especially such that the first operating device is operable by a first hand of an operator, whereas the second operating device is operable by the other hand of the operator.

27. Personal mobility vehicle according to one of the preceding claims, **characterized by** at least one or more front caster wheels (7a, 7b, 107a, 107b, 307, 507a, 507b) and/or one or more rear caster wheels (9a, 9b, 109a, 109b, 209, 509a, 509b).

28. Personal mobility vehicle according to one of the preceding claims, **characterized in that**
the vehicle is realized in form of a wheelchair (1, 101, 501).

29. Method for rearward tilting a seat of a personal mobility vehicle (1, 101), wherein the method comprises a first pivoting of the seat (15, 115) through a first range of tilting, the first pivoting being about a first pivot point, **characterized in that**
the method further comprises a second pivoting of the seat (15, 115) through a second range of tilting, the second tilting being about a second pivot point (39, 139).

30. Method according to claim 29, **characterized in that**
the method further comprises pivoting a seat frame member (17, 117) of the seat (15, 115) about a second pivot axis (47, 147) defining the first pivot point with respect to at least one tilt frame strut (43, 143) at least indirectly connecting the seat frame member (17, 117) to a base frame (3a, 3b, 103a, 103b) of the personal mobility vehicle (1, 101) and pivoting the tilt frame strut (43, 143) with respect to the base frame (3a, 3b, 103a, 103b) about a first pivot axis (39, 139) defining the second pivot point.

31. Method according to claim 29 or 30, **characterized in that**
the pivoting of the tilt frame strut (43, 143) about the first pivot axis and/or the seat (15, 115) about the second pivot point is controlled by at least one first actuation member (49, 149) and/or the pivoting of seat frame member (17, 117) around the second pivot axis (47, 147) and/or the seat about the first pivot point is controlled by at least one second actuation member (51, 151).

32. Method according to claim 30 or 31, **characterized in that**
for increasing the tilt of the seat (15, 115) firstly the seat frame member (17, 117) is pivoted about the second pivot axis (47, 147), especially by operating the second actuation member (51, 151), and secondly the tilt frame strut (43, 143) is pivoted about the first pivot axis (39, 139), especially by operating the first actuation member (49, 149), when a tilt angle and/or a modulus of a tilt angle of the seat frame member (17, 117) is equal or greater than a first tilt angle value, and/or that for decreasing the tilt of the seat (15, 115) firstly the tilt frame strut (47, 147) is pivoted about the first pivot axis (39, 139), especially by operating the first actuation member (49, 149), and secondly the seat frame member (17, 117) is pivoted about the second pivot axis (47, 147), especially by operating the second actuation member (51, 151), when a tilt angle and/or a modulus of a tilt angle of the seat frame member (17, 117) is equal or less than a second tilt angle value.

33. Method according to claim 32, **characterized in that**
the first tilt angle value is equal to the second tilt angle value.

34. Method according to one of the claims 29 to 33, **characterized in that**
the method further comprises altering the tilt of at least one backrest (19) of the seat (15) with respect to the seat frame member (17), especially by operating at least one third actuation member (57).
